# EUROPÄISCHE PATENTSCHRIFT

(11) **EP 3 095 681 B1**
(45) Veröffentlichungstag und Bekanntmachung des Hinweises auf die Patenterteilung: **28.11.2018**
(21) Anmeldenummer: 16170124.8
(22) Anmeldetag: 18.05.2016
(51) Int. Cl.: B62K 25/04, F16F 9/46, F16F 9/53, B62J 99/00

(54) **FAHRRADKOMPONENTE, FAHRRAD UND VERFAHREN**
BICYCLE COMPONENT, BICYCLE AND METHOD
COMPOSANT DE VELO, VELO ET PROCEDE

(30) Priorität: 18.05.2015 DE 102015107701
(43) Veröffentlichungstag der Anmeldung: 23.11.2016
(73) Patentinhaber: DT Swiss AG, 2504 Biel (CH)
(72) Erfinder: Walthert, Martin, CH-3270 Aarberg (CH); Wendel, Valentin, 3008 Bern (CH); Battlogg, Stefan, 6771 St. Anton i.M. (AT)
(74) Vertreter: BSB Patentanwälte Schütte & Engelen Partnerschaft mbB

(56) Entgegenhaltungen:
- EP-A1- 2 042 416
- EP-A2- 2 679 859
- WO-A2-2010/007433
- DE-A1-102010 055 828
- DE-A1-102011 009 405
- DE-T2- 60 120 103
- DE-U1- 20 017 267

## Beschreibung

Die vorliegende Erfindung betrifft eine Fahrradkomponente für ein wenigstens teilweise muskelbetriebenes Fahrrad und insbesondere Mountainbike mit wenigstens einer Stoßdämpfereinrichtung und ein Fahrrad und insbesondere Mountainbike mit einer solchen Fahrradkomponente sowie ein Verfahren zum Betreiben einer Fahrradkomponente. Die Stoßdämpfereinrichtung umfasst wenigstens eine über wenigstens eine Steuereinrichtung steuerbare Dämpfereinrichtung.

Die Stoßdämpfung hat einen großen Einfluss auf die Fahreigenschaften und stellt daher ein wichtiges Merkmal von Fahrrädern und insbesondere Sportfahrrädern wie Mountainbikes dar. So ermöglichen Stoßdämpfer einen verbesserten Bodenkontakt und erlauben ein sportliches Fahren auch im extremen Gelände abseits von Straßen oder befestigten Wegen. Stoßgedämpfte Fahrräder weisen in der Regel eine Federgabel auf, welche häufig durch einen Hinterraddämpfer ergänzt wird. Üblicherweise umfasst ein Stoßdämpfer eine Federeinheit, um auftretende Stöße abzufedern und eine Dämpfungseinheit, um die Federschwingung zu dämpfen.

Um die Vorteile einer Stoßdämpfung optimal ausnutzen zu können, ist in der Regel eine Einstellung der Dämpfungs- und Federeigenschaften unerlässlich. Kriterien für die Einstellung sind dabei beispielsweise das Gewicht des Fahrers und dessen Fahrweise sowie die Eigenschaften des Geländes, in dem gefahren werden soll.

Dazu ist in der Regel eine Justierung des Stoßdämpfers nötig, bei der eine Reihe von Parametern für Dämpfung und Federung eingestellt und aufeinander abgestimmt werden müssen. Besonders für Anfänger ist eine solche Einstellung jedoch nicht immer unproblematisch. In Extremfällen ist es sogar möglich, dass durch eine Kombination ungünstiger Einstellungen die Fahreigenschaften verschlechtert werden.

Im Stand der Technik sind daher Stoßdämpfer für den Einsatz an Fahrrädern bekannt geworden, welche speziell für Anfänger nur wenige oder nur die wichtigsten Einstellmöglichkeiten zur Verfügung stellen. Im Gegensatz dazu können Stoßdämpfer für fortgeschrittene Benutzer oder Experten eine größere Zahl von Einstellmöglichkeiten aufweisen.

So ist beispielsweise mit der DE 10 2011 009 405 A1 ein Dämpfer bekannt geworden, bei dem die Dämpfungseigenschaften mittels einer Elektronikeinheit eingestellt werden können. Dabei ist die Elektronikeinheit wechselbar vorgesehen, sodass ein Anfänger bzw. Einsteiger eine Elektronikeinheit mit wenig oder gar keinen Einstellmöglichkeiten verwenden kann, während erfahrene Benutzer bzw. Experten ein Modell mit komplexeren Einstellmöglichkeiten verwenden können.

Problematisch ist allerdings, dass auch bei einer optimal erfolgten grundlegenden Einstellung der Stoßdämpfer noch nachträgliche Justierungen nötig sind, wenn die Anforderungen an die Dämpfung während des Einsatzes wechseln. Das ist gerade dann der Fall, wenn ein Gelände mit stark unterschiedlichen Eigenschaften durchfahren wird. Daher sind im Stand der Technik Dämpfer bekannt geworden, welche beispielsweise über einen Seilzug eine Anpassung der Dämpfungseigenschaften während der Fahrt erlauben.

Nachteilig an den bekannten Lösungen ist allerdings, dass eine Einstellung während der Fahrt einen Teil der Konzentration des Fahrers fordert. Das ist besonders dann kritisch, wenn beispielsweise ein schwieriger Parcours oder ein steiler und schmaler und unbefestigter Pfad durchfahren werden. Zudem sind in einem solchen Terrains in der Regel auch häufiger Umstellungen an den Stoßdämpfern vorzunehmen, sodass der Fahrer gerade in anspruchsvollen Fahrsituationen öfter abgelenkt ist.

Grundsätzlich bekannt sind steuerbare Stoßdämpfer in Kraftfahrzeugen. Dort werden steuerbare Stoßdämpfer eingesetzt, die in Abhängigkeit von Sensordaten betrieben werden können. Moderne Kraftfahrzeuge können mittlerweile Sensorsysteme aufweisen, die vorausschauen und auf Hindernisse auf der Fahrbahn aufmerksam machen oder von selbst geeignet reagieren. Dazu muss das Sensorsystem die Straße vor dem Kraftfahrzeug und mögliche Hindernisse auf der Straße erfassen. Obwohl sich die sensorische Erkennung nur auf den Straßenbereich vor dem Kraftfahrzeug beschränkt, ist eine ungeheure Vielzahl von Daten auszuwerten, wodurch sehr viel und sehr schnelle Rechenkapazität benötigt wird, da die Daten in Echtzeit ausgewertet werden müssen. Dem Auswertungssystem kommt dabei zugute, dass der Straßenverlauf bekannt ist und genormten Regeln folgt. Es muss nur der Bereich der Straße vor dem Kraftfahrzeug erfasst und ausgewertet werden. Es ist nicht nötig, seitlich neben der Straße stehende Bäume oder Häuser zu erfassen und auszuwerten. Ein Straßenverlauf ist in der Regel nur mäßig kurvig und wenn stärkere Kurven kommen, ist die Geschwindigkeit des Kraftfahrzeugs entsprechend geringer. Der technische Aufwand zur Herstellung solcher Stoßdämpfer und der energetische Aufwand beim Betrieb von Stoßdämpfern sind bei Kraftfahrzeugen mit Motorleistungen in der Größenordnung von 100 kW von untergeordneter Bedeutung, auch wenn dort auch auf den Energieverbrauch geachtet wird. Bei einem Kraftfahrzeug spielt es grundsätzlich keine Rolle, ob das Steuerungssystem kontinuierlich 10 Watt oder 100 W oder mehr benötigt. Bei einem Fahrrad ist ein solcher Leistungsbedarf nicht möglich, es gelten andere Anforderungen, selbst wenn das Fahrrad eine elektromotorische Unterstützung haben sollte.

Zudem kann sich bei einem Mountainbike der Weg jederzeit sehr abrupt ändern. Ein unbefestigter Waldweg ist in der Regel sehr schmal und kann scharfe Knicke aufweisen oder in Serpentinen verlaufen. Zudem ist keinerlei Markierung des Weges auf dem Boden vorhanden, die ausgewertet werden könnte, um den weiteren Verlauf zu ermitteln. Außerdem sind vor Bäumen oder anderen größeren oder kleineren Hindernissen Gabelungen des Wegverlaufes möglich. Es ist daher mit heutiger Technik praktisch unmöglich, die nötige und extrem breite Fläche in Fahrtrichtung vor dem Fahrrad zu erfassen und sinnvoll auf mögliche Hindernisse zu untersuchen, um einen Stoßdämpfer im Vorfeld schon geeignet auf einen konkreten Hindernisaufprall einzustellen. Das liegt auch daran, dass der Verlauf des Weges in der Regel unbekannt und nicht nur der dann schließlich tatsächlich gefahrene Weg in Frage kommt, sondern auch eine Vielzahl möglicher Wege (knapp) daneben.

Aus den angeführten Gründen ist eine Übertragung der in Kraftfahrzeugen angewendeten Technik auf Fahrräder und insbesondere auf Mountainbikes nicht möglich.

Mit der EP 2 468 615 B1 ist eine Fahrwerksteuerung für Fahrräder bekannt geworden, bei der in Abhängigkeit von den aktuellen Sensordaten ein Stoßdämpfer eingestellt wird. Auf einem ebenen Streckenabschnitt wird nur eine geringe Dämpfung eingestellt, während auf einem Streckenabschnitt mit stärkeren Stößen eine stärkere Dämpfung und bei einer Bergauffahrt ein Lockout eingestellt wird. Manuelle Änderungen der automatisch eingestellten Dämpfungswerte sind möglich.

Mit der EP 2 468 616 B1 ist eine Fahrwerksteuerung bekannt geworden, bei der eine Steuereinrichtung einen Lernmodus bereitstellt und streckenbezogene GPS-Daten in einer Speichereinrichtung ablegt und bei der in einem Wiederholmodus die Dämpfereinrichtung entsprechend der in der Speichereinrichtung abgelegten streckenbezogenen Daten gesteuert wird. Dadurch können bei einer bekannten Strecke oder beim Rundenfahren für jeden Fahrer individuell optimale Dämpfungsbedingungen abgelegt und eingestellt werden. Nachteilig ist, dass das nur auf bekannten Strecken möglich ist.

Mit der US 9,501,988 B2 ist ein Stoßdämpfer und ein Verfahren zum Betreiben eines Stoßdämpfers mit einem magnetorheologischen Fluid bekannt geworden, wobei eine Relativgeschwindigkeit in Echtzeit ermittelt und daraufhin eine daraus resultierende Dämpfungskraft in Echtzeit eingestellt wird. Bei einem solchen System wird zu jedem Zeitpunkt auf die aktuelle Belastungssituation angemessen reagiert. Es wird nicht auf z. B. die durchschnittliche Belastung der letzten 100 m Wegstrecke reagiert, sondern auf jeden einzelnen Stein oder jede einzelne Wurzel individuell sogar während des Überfahrens. Das System funktioniert zuverlässig. Nachteilig daran ist aber, dass vor dem Stoß keinerlei Informationen über ein Hindernis vorhanden sind.
Mit der EP 2 679 859 A2 sind ein Stoßdämpfer mit einem magnetorheologischen Fluid für ein Fahrrad und ein Verfahren zum Betreiben eines solchen Stoßdämpfers bekannt geworden, wobei eine Relativgeschwindigkeit von zwei Dämpferkomponenten mittels eines Sensors in Echtzeit ermittelt wird. Daraufhin wird eine Dämpfungskraft mittels einer Steuereinrichtung und anhand einer Kennlinie in Echtzeit eingestellt. Die Steuereinrichtung kann dabei drahtlos bzw. berührungslos Daten von dem Sensor empfangen. Der Sensor ist in der Federgabel untergebracht. Die Relativbewegung der Dämpferkomponenten erfolgt nach einem Stoß auf den Stoßdämpfer bzw. einem Kontakt mit einem Hindernis. Der Sensor kann die Relativgeschwindigkeit der Dämpferkomponenten somit zwar in Echtzeit, aber erst als Folge eines Stoßes erfassen.
Die DE 601 20 103 T2 zeigt einen Stoßdämpfer für ein Fahrrad, welcher mittels einer Steuereinrichtung eingestellt werden kann. Dabei ist ein Vorderrad-Geländesensor in der Federgabel untergebracht, um ein Auseinanderziehen bzw. Zusammendrücken der Gabel zu erfassen und der Steuereinrichtung bereitzustellen. Das Auseinanderziehen bzw. Zusammendrücken erfolgt nach einer Belastung der Federgabel bzw. einem Kontakt mit einem Hindernis. Dokument DE102010055828 A1 offenbart eine Fahrradkomponente gemäß des Oberbegriffes von Anspruch 1 und ein Verfahren zum Betreiben dieser Fahrradkomponente gemäß des Oberbegriffes von Anspruch 12. Es ist daher die Aufgabe der vorliegenden Erfindung, eine Fahrradkomponente zur Verfügung zu stellen, welche eine verbesserte Anpassung von Dämpfungseigenschaften während der Fahrt insbesondere auch im unbekannten Gelände ermöglicht.

Diese Aufgabe wird durch eine Fahrradkomponente mit den Merkmalen des Anspruchs 1 und durch ein Verfahren nach Anspruch 12 gelöst. Bevorzugte Weiterbildungen der Erfindung sind Gegenstand der Unteransprüche. Weitere Vorteile und Merkmale ergeben sich durch die allgemeine Beschreibung und die Beschreibung der Ausführungsbeispiele.

Die erfindungsgemäße Fahrradkomponente ist für ein wenigstens teilweise muskelbetriebenes Fahrrad geeignet und vorgesehen. Das Fahrrad umfasst wenigstens eine Stoßdämpfereinrichtung mit wenigstens einer steuerbaren Dämpfereinrichtung. Die Dämpfereinrichtung ist durch wenigstens eine Steuereinrichtung steuerbar. Die Steuereinrichtung ist insbesondere ein Teil der Fahrradkomponente. Die Steuereinrichtung kann auch Teil des Fahrrads sein. Die Fahrradkomponente umfasst dabei wenigstens eine Erkennungseinrichtung mit wenigstens einer Sensoreinrichtung. Die Sensoreinrichtung umfasst wenigstens eine Empfangseinheit zur berührungslosen Erfassung wenigstens eines Signals. Die Sensoreinrichtung ist an (wenigstens) einem Bauteil des Fahrrads angeordnet, welches bei einer Lenkbewegung verschwenkbar ist bzw. mit verschwenkt wird. Oder die Sensoreinrichtung ist derart angeordnet, dass die Sensoreinrichtung wenigstens zum Teil bei einer Lenkbewegung des Fahrrads verschwenkbar ist. Die Erkennungseinrichtung ist dazu geeignet und ausgebildet, in Abhängigkeit des berührungslos erfassten Signals die Unwegsamkeit zu erkennen. Die Erkennungseinrichtung ist zudem dazu geeignet und ausgebildet, wenigstens eine Stoßdämpfereinrichtung oder wenigstens eine Dämpfereinrichtung in Abhängigkeit der erkannten Unwegsamkeit zu steuern, sodass wenigstens eine Dämpfungseigenschaft der Stoßdämpfereinrichtung durch ein Signal der Erkennungseinrichtung einstellbar ist.

Es ist wenigstens eine Erkennungseinrichtung mit wenigstens einer Sensoreinrichtung vorgesehen, welche wenigstens eine Empfangseinheit zur Erfassung wenigstens eines Signals umfasst. Die Erkennungseinrichtung ist dazu geeignet und ausgebildet, in Abhängigkeit des erfassten Signals wenigstens eine Unwegsamkeit zu erkennen und wenigstens eine Stoßdämpfereinrichtung in Abhängigkeit der erkannten Unwegsamkeit zu steuern, sodass wenigstens eine Dämpfungseigenschaft der Stoßdämpfereinrichtung durch ein Signal der Erkennungseinrichtung einstellbar ist.

Die erfindungsgemäße Fahrradkomponente hat viele Vorteile. Ein erheblicher Vorteil ist, dass Unwegsamkeiten erkannt werden und dass die Dämpfereinrichtung in Folge der erkannten Unwegsamkeit eingestellt wird. Dadurch ist eine sehr einfache und komfortable Anpassung der Dämpfungseigenschaften an die jeweils vorherrschenden Geländebedingungen möglich. Beispielsweise kann der Fahrer direkt von einem ebenen Forstweg auf einen anspruchsvollen Pfad mit zahlreichen Unebenheiten und Stufen wechseln, ohne dass er sich Gedanken über eine Umstellung der Dämpfungseigenschaften machen muss.

Dabei ist es von großem Vorteil, dass die Sensoreinrichtung oder wenigstens ein Teil der Sensoreinrichtung mit einer Lenkbewegung mit verschwenkt wird. Unter anderem dadurch wird der praktische Einsatz an Fahrrädern dadurch erst möglich. Der zur Erfassung nötige Bereich vor dem Fahrrad kann ganz erheblich eingeschränkt werden, da praktisch nur ein schmaler Streifen vor der Spitze des Vorderradreifens erfasst und ausgewertet muss. Es ist nicht nötig die gesamte Breite einer befestigten Landstraße zu erfassen und auszuwerten, sondern es kann beispielsweise nur eine Breite von 0,25 m oder von 0,5 m vor dem Vorderrad und eine Länge von 1 m oder 2 m oder auch nur 0,5 m vor dem Vorderrad erfasst und ausgewertet werden. In einem solchen Bereich erfasste Objekte und Hindernisse können vorzugsweise zur Steuerung berücksichtigt werden.

Vorzugsweise ist die Sensoreinrichtung an wenigstens einem Bauteil des Fahrrads angeordnet ist, welches bei einer Lenkbewegung verschwenkbar ist. Das hat den Vorteil, dass die Sensoreinrichtung im Wesentlichen stets in die Fahrtrichtung ausgerichtet ist. Insbesondere kann die Sensoreinrichtung an dem Lenker oder der Lenkstange oder der Gabel oder dem Vorderrad angeordnet oder befestigt oder damit schwenkbar verbunden sein. Die Sensoreinrichtung kann in allen Ausgestaltungen wenigstens eine Sendeeinheit und wenigstens eine Empfangseinheit umfassen. Vorzugsweise umfasst die Fahrradkomponente eine Recheneinrichtung, welche mit der Sensoreinrichtung erfasste Daten auswertet. Die Erkennungseinrichtung kann die Recheneinrichtung umfassen.

Vorzugsweise ist die Sensoreinrichtung am Vorderrad, an der Gabel und/oder am Lenker und/oder am Vorbau angeordnet sein. Möglich ist auch die Anordnung der Sensoreinrichtung an einem Bauteil der Vorderradnabe. Dabei ist es möglich, dass die Sendeeinheit und die Empfangseinheit beabstandet voneinander und/oder an separaten Komponenten angeordnet sind. Möglich ist es auch, dass nur ein Teil der Sensoreinrichtung wie z. B. eine Empfangseinheit mit der Lenkung verschwenkbar ist. Ein anderer Teil der Sensoreinrichtung wie eine Sendeeinheit kann an einer bei einer Lenkbewegung feststehenden Komponente des Fahrrads angeordnet sein. In jedem Fall ergibt sich der Vorteil, dass nur ein kleiner Bereich vor dem Fahrrad auf Unwegsamkeiten hin untersucht werden muss. Dadurch kann der zu erfassende Bereich erheblich verringert werden, sodass auch mit relativ geringem Aufwand und mit einer an sich relativ geringen Rechnerkapazität eine zuverlässige Auswertung möglich ist.

In jedem Fall ist wenigstens ein Teil der Sensoreinrichtung bei einer Lenkbewegung verschwenkbar. Der Teil der Sensoreinrichtung oder die Sensoreinrichtung insgesamt kann auch an einem feststehenden Teil der Fahrradkomponente befestigt sein, wenn für eine Übertragung der Lenkbewegung auf die Sensoreinrichtung bzw. den verschwenkbaren Teil der Sensoreinrichtung gewährleistet ist. Das kann auch über eine Kopplung wie z.B. eine Koppelmechanik oder ein Getriebe oder einen Riemen oder Zahnriemen etc. erfolgen. Möglich ist es auch, dass die Sensoreinrichtung (wenigstens zum Teil) motorisch verschwenkt wird, wenn eine Lenkbewegung durchgeführt wird.

Vorzugsweise ist die Erkennungseinrichtung dazu geeignet und ausgebildet, einen Wegtyp wie z. B. einen Waldweg, eine Downhillstrecke, eine befestigte Straße etc. zu erkennen und/oder zu klassifizieren. Vorzugsweise ist die Erkennungseinrichtung dazu geeignet und ausgebildet den Nahbereich in Abhängigkeit des erkannten Wegtyps vorzugeben. Beispielsweise wird der Nahbereich bei dem Wegtyp "Straße" und insbesondere "glatte Straße" vorzugsweise größer eingestellt. Dann wird vorzugsweise ein erheblich größerer Nahbereich auf mögliche Unwegsamkeiten untersucht. Wird hingegen der Wegtyp "Waldweg" oder "Downhillstrecke" erkannt, wird vorzugsweise der zu erkennende und auszuwertende Nahbereich verkleinert.

Der Wegtyp kann auf unterschiedliche Arten ermittelt werden. Es ist möglich den Wegtyp über GPS-Koordinaten abzuleiten. Der Wegtyp kann auch manuell vorgegeben werden. Es ist auch möglich, dass der Wegtyp optisch (über z. B. eine Kamera) erkannt wird. Bevorzugt ist es auch, dass die Erkennungseinrichtung dazu geeignet und ausgebildet ist, den Wegtyp in Abhängigkeit von der Häufigkeit und der Intensität der überfahrenen Unwegsamkeiten zu klassifizieren. Häufige und starke Stöße lassen auf eine Downhillstrecke schließen, jedenfalls wenn das GPS-Signal und/oder eine Lagesensor ein Gefälle erkennt.

Vorzugsweise ist die Erkennungseinrichtung dazu geeignet und ausgebildet, einen Wahrscheinlichkeitswert für ein Überfahren einer erkannten Unwegsamkeit abzuleiten und bei Übersteigen einer vorbestimmten Wahrscheinlichkeit die Stoßdämpfereinrichtung in Abhängigkeit von der erkannten Unwegsamkeit einzustellen und/oder auf die erkannte Unwegsamkeit "vorzubereiten".

Vorzugsweise wird die Wahrscheinlichkeit des Überfahrens einer Unwegsamkeit (aller erkannter Unwegsamkeiten) periodisch überprüft bzw. neu berechnet. So kann es gerade bei Fahrten über schmale Waldwege bei einer Entfernung von 1 m bis zu einer Baumwurzel oder einem z.B. faustgroßem Stein noch sehr wahrscheinlich erscheinen, dass der erkannte Stein überfahren wird, während es anschließend durch zwischenzeitliche Lenkbewegungen des Fahrers bei einer Entfernung von 50 cm bis zur Spitze des Vorderrades sicher ist, dass der Stein nicht in der Fahrtlinie des Fahrrads liegt. So ist die Erkennungseinrichtung vorzugsweise dazu geeignet und ausgebildet, eine Wahrscheinlichkeit für ein Überfahren einer erkannten Unwegsamkeit in (kurzen) zeitlichen Abständen von z. B. 10 ms, 20 ms oder 50 ms oder 100 ms periodisch zu ermitteln.

Die Häufigkeit der Ermittlung kann auch von der gefahrenen Geschwindigkeit und von dem Abstand einer erkannten Unwegsamkeit abhängen.

Ein weiterer Vorteil ist, dass die Stärke der Dämpfung ganz gezielt auf eine bestimmte, demnächst zu erreichende Unwegsamkeit eingestellt werden kann. So können beispielsweise kleinere Unebenheiten weniger stark gedämpft werden als größere Stufen im Gelände. Eine solche Anpassung der Dämpfungseigenschaften an das aktuell vorherrschende Gelände ermöglicht auch eine optimale Ausnutzung der maximal erzielbaren Dämpfung eines Stoßdämpfers, sodass das Fahrwerk selbst bei einer extremen Fahrweise stets angepasst ist. Durch die bessere Ausnutzung können die Stoßdämpfer zudem kleiner dimensioniert werden, sodass auch Gewicht eingespart wird. Es kann Dämpferweg "bevorratet" oder "zurückgehalten" werden, damit für die schon vor dem Vorderrad absehbare Unwegsamkeit noch genügend Dämpferhub zur Verfügung steht.

Die Erkennungseinrichtung ist insbesondere dazu geeignet und ausgebildet, die Unwegsamkeit anhand des erfassten Signals wenigstens teilweise zu charakterisieren. Eine solche Charakterisierung ist beispielsweise die Bestimmung einer Form bzw. Geometrie der Unwegsamkeit und/oder eine Einordnung der Unwegsamkeit in eine hinterlegte Kategorie und/oder eine Abstandsmessung. Beispielsweise kann auch die Höhe und/oder der Winkel zum Boden und/oder der Winkel wenigstens einer Seitenfläche der Unwegsamkeit bestimmt werden.

Unter dem Begriff Unwegsamkeit wird im Sinne der vorliegenden Erfindung insbesondere wenigstens ein Störobjekt entlang des Fahrweges verstanden, welches bei einer entsprechenden Weiterfahrt einen Stoß auf das Fahrwerk ausüben kann, sodass die Dämpfereinrichtung aktiv wird.

Vorzugsweise sind die Dämpfereinrichtung und die Steuereinrichtung so ausgebildet, dass eine Dämpfungseigenschaft der Dämpfereinrichtung um wenigstens 50% des Einstellbereichs in weniger als 30 ms veränderbar ist. Vorzugsweise ist eine Dämpfungseigenschaft der Dämpfereinrichtung in weniger als 30 ms beliebig im gesamten Einstellbereich einstellbar. Insbesondere ist infolge einer erkannten Unwegsamkeit im Nahbereich die Dämpfungseigenschaft der Dämpfereinrichtung in weniger als 30 ms Sekunden einzustellen.

Grundsätzlich kann es schwierig sein, den Fahrweg vorauszusagen, da der Fahrer oft mehr oder weniger instinktiv einem Hindernis ausweichen wird, wenn es denn nicht über die ganze Fahrbahnbreite ragt. Dann kann es passieren, dass eine Unwegsamkeit erkannt wird und die Stoßdämpfereinrichtung eingestellt oder die Einstellung vorbereitet wird. Anschließend kann durch das Umfahren das Hindernis ausbleiben, sodass das erwartete Ereignis nicht eintritt, weil der Fahrer den Fahrweg ändert. Das stellt in bevorzugten Ausgestaltungen aber kein Problem dar, da die Stoßdämpfereinrichtung in weniger als 30 ms und insbesondere weniger als 10 ms eingestellt werden kann, sodass nicht plötzlich eine Einstellung vorliegt, die dann doch nicht gebraucht wird. Vorteilhafterweise wird die Dämpfereinrichtung mit einem magnetorheologischen Fluid und einem steuerbaren Dämpfungsventil ausgerüstet. Ein Vorteil einer solchen Dämpfereinrichtung ist die enorme Geschwindigkeit, mit der Änderungen eingestellt werden können.

Das bedeutet, dass nicht weit nach vorn "geschaut" werden muss, um eine Unwegsamkeit zu erkennen. Das heißt, dass meist bei Erkennung einer Unwegsamkeit diese auch relevant wird. Vorzugsweise ist ein Erkennen des Umkurvens möglich, wozu vorzugsweise Lenkbewegungen erkannt und berücksichtigt werden.

Die Empfangseinheit ist beispielsweise als eine Kamera ausgebildet und umfasst wenigstens einen Bildsensor. Der Bildsensor ist vorzugsweise dazu geeignet, eine optische Projektion der Unwegsamkeit zu erfassen. Die optische Projektion kann im Bereich des sichtbaren Lichts und/oder im Infrarotbereich und/oder einem Bereich kürzerer oder längerer Wellenlängen erfassbar sein. Die Kamera kann wenigstens ein Objektiv umfassen. Es können wenigstens ein Filter und/oder wenigstens eine Verstärkereinrichtung und/oder Bildstabilisatoreinrichtung vorgesehen sein. Möglich ist auch eine Stereokamera zur Erfassung räumlicher Informationen der Unwegsamkeit.

Vorzugsweise ist die Steuereinrichtung geeignet und ausgebildet ist, die Dämpfung der Dämpfereinrichtung bis zum Erreichen einer erkannten Unwegsamkeit zu verändern und insbesondere härter einzustellen. Das erfolgt insbesondere bei größeren Unwegsamkeiten, deren Höhe z.B. 5 cm oder 10 cm erreicht oder übersteigt. Dadurch kann sichergestellt werden, dass beim Erreichen der Unwegsamkeit noch genügend Federweg zur angemessenen oder optimalen Bewältigung der Unwegsamkeit zur Verfügung steht. Das gilt insbesondere auch für Sprünge und andere vorhersehbare oder absehbare Ereignisse.

Möglich ist es auch, dass die Stoßdämpfereinrichtung wenigstens eine steuerbare Federeinrichtung umfasst. Dabei kann die Erkennungseinrichtung dazu geeignet und ausgebildet sein, in Abhängigkeit der erkannten Unwegsamkeit wenigstens eine Federeigenschaft der Federeinrichtung einzustellen. Zur Einstellung kann z. B. wenigstens ein elektrisch angetriebener Aktor vorgesehen sein.

Die Stoßdämpfereinrichtung kann auch mehrere Dämpfereinrichtungen umfassen. Insbesondere ist wenigstens eine Dämpfereinrichtung der wenigstens einen Dämpfereinrichtung der Stoßdämpfereinrichtung durch die Erkennungseinrichtung steuerbar.

Das erfasste Signal ist insbesondere ein durch eine Unwegsamkeit verändertes oder von einer solchen reflektiertes Signal.

In einer besonders vorteilhaften Ausgestaltung umfasst die Sensoreinrichtung wenigstens eine Sendeeinheit. Die Sendeeinheit ist vorzugsweise geeignet und ausgebildet, wenigstens ein Signal auszusenden. Die Empfangseinheit ist vorzugsweise dazu geeignet und ausgebildet, wenigstens eine wenigstens teilweise von der Unwegsamkeit ausgehende Reflexion des ausgesendeten Signals zu empfangen und als Signal zu erfassen. Die Erkennungseinrichtung vorzugsweise dazu geeignet und ausgebildet, in Abhängigkeit des erfassten Signals die Unwegsamkeit zu erkennen. Die Erkennungseinrichtung ist zudem insbesondere dazu geeignet und ausgebildet, die Dämpfereinrichtung in Abhängigkeit der erkannten Unwegsamkeit zu steuern, sodass wenigstens eine Dämpfungseigenschaft der Dämpfereinrichtung durch ein Signal der Erkennungseinrichtung einstellbar ist. Das reflektierte Signal kann besonders vorteilhaft durch die Erkennungseinrichtung verarbeitet und für eine besonders zuverlässige Erkennung von Unwegsamkeiten herangezogen werden.

Das ausgesendete bzw. empfangene Signal ist insbesondere eine Transversalwelle und/oder eine Longitudinalwelle, beispielsweise eine elektromagnetische Welle und/oder eine Schallwelle. Dabei ist möglich, dass die Welle entsprechenden Modulationen unterzogen wird. Möglich ist auch eine Aussendung als ein Impuls und insbesondere als ein ultrakurzer Impuls. Es kann eine Pulsphasenmodulation vorgesehen sein. Die Unterschiede zwischen den gesendeten und reflektierten Signalen sind beispielsweise charakteristisch für die Größe, die Form und/oder die stoffliche Zusammensetzung der Unwegsamkeit. Die Unterschiede der gesendeten und reflektierten Signale betreffen z. B. die Amplitude, die Frequenz, die Wellenlänge, die Phase und/oder die Polarisation. Es können auch Interferenzen zwischen einem ausgesendetem und einem empfangenen Signal ermittelt werden. Beispielsweise ist die Sensoreinrichtung als ein Interferometer ausgebildet oder kann ein solches umfassen. Vorzugsweise werden dazu Signale im Bereich kürzerer Wellenlängen eingesetzt, wie z. B. sichtbares Licht.

Vorzugsweise sind die Sendeeinheit und die Empfangseinheit in wenigstens einem gemeinsamen Sensor integriert. Möglich ist es auch, dass die Sendeeinheit und die Empfangseinheit separat ausgebildet sind. Die Übertragung zwischen der Sensoreinrichtung und der Erkennungseinrichtung kann dabei drahtlos erfolgen. Es kann aber auch wenigstens eine entsprechende Verbindungsleitung vorgesehen sein.

Insbesondere umfasst die Dämpfereinrichtung wenigstens eine erste Dämpferkammer und wenigstens eine zweite Dämpferkammer. Die Dämpferkammern sind insbesondere über wenigstens ein steuerbares Dämpfungsventil miteinander gekoppelt. Die einstellbare Dämpfungseigenschaft ist insbesondere wenigstens ein Maß der Dämpfung. Beispielsweise ist die Dämpfungseigenschaft eine harte oder weiche Dämpfung.

In einer besonders bevorzugten Weiterbildung ist dem Dämpfungsventil wenigstens einer steuerbare Felderzeugungseinrichtung zugeordnet. Die Felderzeugungseinrichtung ist insbesondere dazu geeignet und ausgebildet, durch die Erkennungseinrichtung gesteuert zu werden. Beispielsweise kann dazu eine elektrische Spule vorgesehen sein. Insbesondere ist die Felderzeugungseinrichtung dazu geeignet und ausgebildet, eine Feldstärke in wenigstens einem Dämpfungskanal des Dämpfungsventils zu erzeugen und/oder zu steuern. Dabei ist in dem Dämpfungskanal vorzugsweise ein feldempfindliches rheologisches Medium vorgesehen.

Vorzugsweise ist die Dämpfereinrichtung mit wenigstens einem magnetorheologischen Fluid versehen und weist wenigstens ein einstellbares magnetorheologisches Dämpfungsventil auf. Möglich ist auch wenigstens ein mechanisch ansteuerbares Dämpfungsventil. Besonders bevorzugt wird als rheologisches Medium ein magnetorheologisches Medium und insbesondere ein magnetorheologisches Fluid eingesetzt. Dabei wird insbesondere über die Intensität und Stärke des durch die Felderzeugungseinrichtung aufgebauten Magnetfeldes die resultierende Viskosität des Fluids beeinflusst.

In einer weiteren besonders bevorzugten Weiterbildung ist die Erkennungseinrichtung dazu geeignet und ausgebildet, die Dämpfereinrichtung in Abhängigkeit von Unwegsamkeiten zu steuern, welche in einem Nahbereich liegen. Vorzugsweis werden nur Unwegsamkeiten im Nahbereich berücksichtigt. Insbesondere ist der Nachbereich durch wenigstens eine in der Erkennungseinrichtung hinterlegte Vorgabe definiert, z. B. durch eine Distanz, Länge und/oder Breite und/oder durch einen Winkel. Möglich ist auch ein dynamisch anpassbarer Nahbereich. Der Nahbereich kann auch durch eine Vorgabe des Benutzers einstellbar sein.

Beispielsweise kann der Nahbereich 1m oder 2m oder 3m oder auch 5 m oder auch mehr betragen. Möglich ist auch, dass sich der Nahbereich über 10 m oder 15 m oder sogar 20 m oder mehr erstreckt. Der Nahbereich kann auch weniger als 1 m und beispielsweise 70 cm oder 50 cm oder 20 cm oder auch 10 cm oder weniger betragen. Vorzugsweise erstreckt sich der Nahbereich von einem am vorderen Ende des Fahrrads liegenden Bereich in Fahrtrichtung nach vorne. Beispielsweise beginnt der Nahbereich vor dem Vorderrad und/oder dem Lenkerbereich. Besonders bevorzugt ist der Nahbereich kürzer als 30 m und insbesondere kürzer als 10 m.

Die Berücksichtigung von Unwegsamkeiten in einem Nahbereich bietet erhebliche Vorteile, weil beim Fahrradfahren und insbesondere beim Mountainbiken oft zahlreiche und sehr schnelle Richtungswechsel vorgenommen werden. Eine weit vorausschauende Erkennung wäre somit nicht zweckdienlich und eher nachteilig, da es zu einer Berücksichtigung von Unwegsamkeiten kommen kann, die letztlich gar nicht überfahren werden oder auch nicht überfahren werden wollen. Hierbei zeigt sich insbesondere, dass eine Übertragung von aus dem Automobilbereich bekannten Hinderniserkennungssystemen nicht zur Lösung der vorgenannten Aufgabe führt. Im Automobilbereich müssen Hindernisse erkannt werden, welche möglichst weit voraus liegen und eine Gefahr für die Weiterfahrt auf dem gewählten Fahrweg darstellen. Im Fahrradbereich hingegen ist es in der Regel gewünscht, auf die Unwegsamkeiten zuzufahren und diese mit dem Fahrrad zu überwinden. Die hier vorgestellte Erfindung soll somit nicht ein Umfahren von Hindernissen, sondern eben gerade ein Überfahren von Unwegsamkeiten durch eine Anpassung von Dämpfungseigenschaften unterstützen.

Besonders bevorzugt ist die Erkennungseinrichtung auch dazu geeignet und ausgebildet, den Nahbereich in Anhängigkeit einer Fahrgeschwindigkeit des Fahrrads vorzugeben. Vorzugsweise erstreckt sich der Nahbereich insbesondere maximal über die Distanz, welche das Fahrrad anhand der Fahrgeschwindigkeit in einer Sekunde zurücklegt. Eine solche Festlegung des Nahbereichs in Abhängigkeit der Fahrgeschwindigkeit bietet den Vorteil, das im Wesentlichen solche Unwegsamkeiten Berücksichtigung finden, welche auch für die Fahrwerksauslastung relevant sind. Beispielsweise werden solche Unwegsamkeiten, die sich in einer Entfernung von etwa einer Fahrsekunde zum Vorderrad befinden, mit sehr hoher Wahrscheinlichkeit auch überfahren.

Möglich ist auch, dass sich der Nahbereich maximal über die Distanz erstreckt welche das Fahrrad anhand der Fahrgeschwindigkeit in weniger als einer Sekunde und beispielsweise in einer halben Sekunde oder besonders bevorzugt in 0,2 Sekunden oder vorzugsweise 0,1 Sekunden oder weniger zurücklegt. Möglich ist es aber auch, dass sich der Nahbereich über die Distanz erstreckt, welche das Fahrrad anhand der Fahrgeschwindigkeit in mehr als einer Sekunde und beispielsweise 1,5 Sekunden oder 2 Sekunden oder 3 Sekunden zurücklegt. Zur Bestimmung der Fahrgeschwindigkeit kann die Fahrradkomponente geeignete Sensoren umfassen. Es kann auch ein Tachometer und/oder Navigationssystem des Fahrrads abgefragt werden. Der Nahbereich oder dessen Länge kann insbesondere auch von der Art des Weges abhängen. So kann eine größere Distanz bei Fahrten auf befestigten Straßen ausgewertet werden, während bei Fahrten auf schmalen Pfaden durch ein Gelände ("Off-Road") ein Nahbereich mit einer erheblich geringeren Länge (und/oder Breite) erfasst wird.

Die Zeit, mittels der die Erstreckung des Nahbereichs definiert wird, kann in Abhängigkeit einer Breite des Nahbereichs festgelegt werden. Die Breite des Nahbereichs erstreckt sich dabei insbesondere quer zur Fahrtrichtung. Die Breite des Nahbereichs kann auch durch einen Erfassungswinkel der Sensoreinrichtung festgelegt werden. Der Erfassungswinkel ist beispielsweise dadurch bestimmt, in welchem Winkel das Signal ausgesendet und/oder in welchem Winkel die Empfangseinheit ein reflektiertes Signal empfängt. Eine solche Ausgestaltung ist vorteilhaft, da die Breite des Nahbereichs einen Einfluss darauf hat, wie schnell eine erkannte Unwegsamkeit durch ein Ausweichmanöver umfahren werden kann und somit für die Dämpfersteuerung irrelevant wird.

Die Erkennungseinrichtung ist bevorzugt dazu geeignet und ausgebildet, in Folge einer erkannten Unwegsamkeit im Nahbereich die Dämpfungseigenschaft der Dämpfereinrichtung in weniger als 30 Millisekunden einzustellen. Unter diesem Zeitraum ist dabei insbesondere die Zeit zu verstehen, die nach einer Erkennung einer Unwegsamkeit für die entsprechende Dämpfereinstellung benötigt wird. Vorzugsweise erfolgt auch die Auswertung der Sensorsignale und die Erkennung der Unwegsamkeit in einem solchen und besonders bevorzugt deutlich kürzeren Zeitraum.

Insbesondere ist auch die Dämpfereinrichtung dazu geeignet und ausgebildet, in der genannten Zeit von der Erkennungseinrichtung eingestellt zu werden. Eine solche kurze Einstellungszeit hat den Vorteil, das entsprechend kurze Nahbereiche verwirklicht werden können. Das erhöht die Wahrscheinlichkeit, dass die erkannten Unwegsamkeiten auch wirklich überfahren werden. Ein weiterer Vorteil ist, dass bei einem plötzlichen Lenkmanöver und einer somit notwendig gewordenen Neuerkennung von Unwegsamkeiten immer noch eine vollständige Anpassung der Dämpfungseigenschaft möglich ist.

Besonders bevorzugt erfolgt die schnelle Einstellung der Dämpfungseigenschaft mittels des Dämpferventils und der zugeordneten Felderzeugungseinrichtung. Insbesondere erfolgt die Einstellung der Dämpfungseigenschaft der Dämpfereinrichtung in weniger als 20 Millisekunden oder weniger als 10 Millisekunden und besonders bevorzugt in weniger als 5 Millisekunden. Die Einstellung kann auch in weniger als 3 Millisekunden und insbesondere in weniger als 2 Millisekunde erfolgen. Möglich ist aber auch eine Einstellung, welche länger als 30 Millisekunden und beispielsweise 50 Millisekunden beträgt.

Die Erkennungseinrichtung ist insbesondere dazu geeignet und ausgebildet, die Höhe der Unwegsamkeit über dem Boden zu ermitteln und für die Steuerung der Dämpfereinrichtung zu berücksichtigen. Vorzugsweise ist die Erkennungseinrichtung dazu geeignet und ausgebildet den Winkel wenigstens eines Bereichs der Unwegsamkeit zum Boden zu ermitteln und für die Steuerung der Dämpfereinrichtung zu berücksichtigen. Beispielsweise kann die Dämpfung desto weicher eingestellt werden, je steiler und/oder höher die Unwegsamkeit ist.

Die Steuerung erfolgt dabei beispielsweise im Sinne einer Kennfeldsteuerung, sodass entsprechende Werte von Höhe und/oder Winkel hinterlegten Werten für die Dämpferhärte zugeordnet werden. Möglich ist auch eine schwellenwertabhängige Steuerung, sodass bei einem Über- und/oder Unterschreiten von Schwellenwerten bzgl. Höhe und/oder Winkel eine zugeordnete Dämpferhärte eingestellt wird. Möglich ist auch, dass die Steuerung lernfähig ausgebildet ist. Dazu kann die Steuerung beispielsweise einen lernfähigen Algorithmus und/oder eine Fuzzylogik und/oder einen Algorithmus im Prinzip eines neuronalen Netzwerkes oder dergleichen umfassen.

In einer vorteilhaften Ausgestaltung ist die Erkennungseinrichtung dazu geeignet und ausgebildet, eine Distanz zu der Unwegsamkeit zu ermitteln. Dabei kann es sein, dass die von der Sensoreinrichtung erfassten Signale charakteristisch für einen Abstand der Unwegsamkeit zu der Sensoreinrichtung sind. Dabei ist die Erkennungseinrichtung insbesondere derart ausgestaltet, aus einem solchen Signal einen Abstand der Unwegsamkeit zu einem Vorderrad und/oder einem Hinterrad des Fahrrads zu ermitteln. Beispielsweise kann ein Korrekturfaktor vorgesehen sein, mittels welchem ein aus dem Abstand zwischen Sensoreinrichtung und Unwegsamkeit der Abstand zwischen dem Vorderrad und der Unwegsamkeit berechenbar ist.

Anhand der Information über den Abstand zwischen Vorderrad und Unwegsamkeit kann der Zeitpunkt berechnet werden, wann das Vorderrad mit der Unwegsamkeit in Kontakt tritt. So kann beispielsweise unter Berücksichtigung der Fahrgeschwindigkeit die Dämpfereinstellung genau dann vorgenommen werden, wenn die Anpassung an die Unwegsamkeit erforderlich ist. In Kombination mit einer zuvor beschriebenen Ausgestaltung, bei welcher eine Felderzeugungseinrichtung zur Dämpfereinstellung verwendet wird, sind dann sehr schnelle und kurzfristige Reaktionen möglich, sodass auch auf direkt vor dem Vorderrad liegende Unwegsamkeiten noch mit einer optimalen Dämpfereinstellung reagiert werden kann.

Insbesondere kann bei vorausschauender Erkennung einer Unwegsamkeit wie einer dicken Wurzel oder dergleichen Federweg vor der Unwegsamkeit eingespart werden, um für die Überwindung der Unwegsamkeit (Wurzel, Stein etc.) sicher noch genug Federweg zur optimalen Dämpfung zur Verfügung zu haben. Ohne vorausschauende Erkennung könnte es erforderlich werden, die Dämpfung beim Überfahren der Unwegsamkeit viel härter einzustellen als eigentlich gewünscht wäre, wenn denn der zur Verfügung stehende Federweg schon weitgehend aufgebraucht ist oder ein Durchschlag droht.

In allen Fällen ist es auch möglich, dass bereits aus der Erkennung einer Unwegsamkeit an sich auf dessen Entfernung zurückgeschlossen werden kann. Dann ist eine zusätzliche Entfernungsbestimmung vorzugsweise nicht notwendig. Das ist beispielsweise dann der Fall, wenn der Erfassungsbereich der Sensoreinrichtung entsprechend fokussiert ist, sodass ohnehin nur in einer bestimmten Entfernung liegende Unwegsamkeiten registriert werden. Dann kann z. B. direkt nach einer Erkennung der Unwegsamkeit unter der Berücksichtigung der Fahrgeschwindigkeit und eines Entfernungsfaktors der Zeitpunkt ermittelt werden, wann das Vorderrad mit der Unwegsamkeit in Kontakt tritt.

Die Erkennungsweinrichtung ist vorzugsweise auch dazu geeignet und ausgebildet, bei der Steuerung der Dämpfereinrichtung wenigstens einen voreingestellten Grenzwert für eine maximale Dämpfung zu berücksichtigen. Die Steuerung kann auch einen Grenzwert für eine minimale Dämpfung berücksichtigen. Der Grenzwert kann dabei vom Benutzer festlegbar sein. Möglich sind auch Grenzwerte in Form von Werksweinstellungen. Möglich ist aber auch, dass der Grenzwert nach wenigstens einer Benutzereingabe automatisch festgelegt wird. Beispielsweise kann der Fahrer sein Gewicht mittels einer Benutzerschnittstelle eingeben und anschließend wird ein Grenzwert für die minimale bzw. maximale Dämpfung festgelegt. Gegebenenfalls wird das Gewicht des Fahrers sensorisch ermittelt.

Solche Ausgestaltungen haben den Vorteil, dass die Einstellung der Dämpfereinrichtung durch die Erkennungseinrichtung nicht zu Einstellungen führt, welche problematisch oder vom Benutzer unerwünscht sind. Es kann auch vorgesehen sein, dass bei bestimmten Fahrsituationen, in denen eine hohe Dämpferauslastung sensiert wird, die Steuerung in Abhängigkeit erkannter Unwegsamkeiten kurzfristig deaktiviert wird. Dazu kann z. B. eine Fahrwerksteuerung vorgesehen und ausgebildet sein, welche Dämpfersensoren umfasst und die Steuerbefehle der Erkennungseinrichtung nach einer bestimmten Priorität ausführt.

In einer vorteilhaften Weiterbildung ist die Fahrradkomponente für eine Stoßdämpfereinrichtung mit wenigstens einer ersten und wenigstens einer zweiten Dämpfereinrichtung vorgesehen. Dabei ist die erste Dämpfereinrichtung vorzugsweise einem Vorderrad und die zweite Dämpfereinrichtung vorzugsweise einem Hinterrad zugeordnet. Die Erkennungseinrichtung kann insbesondere dazu geeignet und ausgebildet sein, die zweite Dämpfereinrichtung zeitverzögert zu der ersten Dämpfereinrichtung einzustellen. Die Erkennungseinrichtung ist vorzugsweise dazu ausgebildet, die Dämpfereinrichtungen unabhängig voneinander einzustellen.

Eine derartige zeitverzögerte Ansteuerung kann den Vorteil haben, dass auch die Dämpfereinrichtung des Hinterrades optimal vorbereitet und zum optimalen Zeitpunkt auf die Unwegsamkeit angepasst werden kann. Dabei ist bevorzugt, dass die Erkennungseinrichtung dazu geeignet und ausgebildet ist, die Zeitverzögerung in Abhängigkeit der Fahrgeschwindigkeit des Fahrrads anzupassen. Insbesondere wird dabei auch der Abstand zwischen Vorderrad und Hinterrad berücksichtigt. Die erste Dämpfereinrichtung kann beispielsweise einer Federgabel zugeordnet sein. Die zweite Dämpfereinrichtung kann beispielsweise als ein Hinterraddämpfer ausgebildet sein.

Es ist möglich, dass der Dämpfereinrichtung wenigstens ein Sensormodul zur Erfassung einer Dämpferauslastung zugeordnet ist. Beispielsweise kann ein Dämpfersensor vorgesehen sein, welcher den Weg und/oder die Geschwindigkeit zweier zueinander beweglichen Bauteile der Dämpfereinrichtung erfasst. Insbesondere kann mittels des Sensormoduls erfasst werden, wie weit und/oder wie schnell der Dämpfer bei einem Stoß zusammenfährt und/oder nach einem Stoß wieder auseinander fährt. Das Sensormodul kann dabei ein Teil des Fahrrades sein, welches der Fahrradkomponente zugeordnet ist. Möglich ist aber auch, dass das Sensormodul von der Fahrradkomponente umfasst ist.

Beispielsweise sind einige Dämpfer bzw. Fahrwerkssteuerrungen bereits werksseitig mit entsprechenden Sensoren zur Erkennung der Auslastung ausgerüstet, insbesondere um eine selbstständige Anpassung vornehmen zu können. Bevorzugt ist die Erkennungseinrichtung dazu geeignet und ausgebildet, derartige Sensordaten auszulesen und bei der Einstellung der Dämpfereigenschaft zu berücksichtigen.

Bevorzugt ist die Erkennungseinrichtung dazu geeignet und ausgebildet, die Dämpferauslastung nach einem Stoß einer zuvor erkannten Unwegsamkeit zu registrieren. Das ermöglicht einen Rückschluss, ob die als Reaktion auf die erkannte Unwegsamkeit erfolgte Einstellung der Dämpfereigenschaft zielführend war oder nicht. Bevorzugt kann die Erkennungseinrichtung die registrierte Dämpferauslastung mit in wenigstens einer Speichereinrichtung hinterlegten Werten für eine Dämpferauslastung vergleichen.

Besonders bevorzugt ist die Erkennungseinrichtung so ausgebildet, dass die Steuerung der Dämpfereinrichtung angepasst werden kann, wenn die registrierte Dämpferauslastung von wenigstens einem vorgegebenen Maß für die Dämpferauslastung abweicht. Dabei wird die Anpassung der Steuerung vorzugsweise so vorgenommen, dass bei zukünftigen Unwegsamkeiten eine bessere Dämpferauslastung im Bereich des vorgegebenen Maßes erreichbar ist. Vorzugsweise ist die Erkennungseinrichtung mit wenigstens einem lernfähigen Algorithmus ausgestattet.

Insbesondere ist die Erkennungseinrichtung so ausgebildet, dass sie die vorgenommenen Dämpfereinstellungen selbstständig kontrollieren kann und bei einem Auftreten von ungünstigen Dämpferauslastungen zukünftige Steuerbefehle an die Dämpfereinrichtung um wenigstens einen Korrekturfaktor anpasst, sodass die Dämpferauslastung zukünftig wieder in einem optimalen Bereich liegt.

Es kann auch wenigstens ein Sensormodul zur Erfassung einer Federauslastung wenigstens einer Federeinrichtung vorgesehen sein. Dabei ist die Erkennungseinrichtung insbesondere dazu geeignet und ausgebildet, das Sensormodul auszulesen und die Steuerung der Federeinrichtung anzupassen, wie es zuvor auch für die Dämpferauslastung beschrieben wurde.

Es ist bevorzugt, dass die Erkennungseinrichtung wenigstens eine Speichereinrichtung zur Ablegung der erkannten Unwegsamkeiten aufweist. Die Speichereinrichtung ist vorzugsweise mit wenigstens einer Schnittstelle wirkverbunden, sodass ein Auslesen der aufgezeichneten Unwegsamkeiten möglich ist, beispielsweise durch einen Benutzer. Möglich ist auch, dass die Erkennungseinrichtung die Speichereinrichtung selbstständig auslesen kann, beispielsweise für eine Selbstkorrektur. Möglich ist auch, dass die Speichereinrichtung zur Aufzeichnung der Dämpferauslastung und/oder der vorgenommenen Dämpfereinstellungen ausgebildet ist. Die Erfassung solcher Daten ermöglicht dem Benutzer eine besonders einfache Kontrolle seiner Einstellungen am Fahrwerk bzw. der Stoßdämpfereinrichtung.

Vorzugsweise ist die Sensoreinrichtung (um eine wenigstens schiefe und vorzugsweise im Wesentlichen horizontale Achse) verschwenkbar an wenigstens einer Halteeinrichtung aufgenommen. Dabei ist insbesondere die Halteeinrichtung mit einem Befestigungselement ausgebildet, welches an einer Komponente des Fahrrads angeordnet wird. Zudem umfasst die Halteeinrichtung wenigstens ein zweites Befestigungselement, welches zur Verbindung mit der Sensoreinrichtung vorgesehen ist. Vorzugsweise ist eine werkzeuglose Montage bzw. Demontage der Sensoreinrichtung an der Halteeinrichtung vorgesehen. Insbesondere kann auch die Halteeinrichtung werkzeuglos am Fahrrad befestigt bzw. demontiert werden.

Besonders bevorzugt ist die Sensoreinrichtung mittels der Halteeinrichtung (vertikal) verschwenkbar am Fahrrad montiert. Die Verschwenkbarkeit ist insbesondere so ausgebildet, dass der Sendewinkel und/oder der Empfangswinkel der Sensoreinrichtung zum Boden einstellbar ist. Beispielsweise kann eine Skalierung und/oder eine Rasterung an der Halteeinrichtung vorgesehen sein, sodass dem Benutzer eine Hilfestellung bei der Ausrichtung der Sensoreinrichtung gegeben wird. Ein derartiges Verschwenken der Sensoreinrichtung hat den Vorteil, dass der Erfassungsbereich für die Erkennung von Unwegsamkeiten schnell und unaufwendig angepasst werden kann.

Insbesondere erfolgt nach einer derartigen Verschwenkung der Sensoreinrichtung eine Anpassung der Erkennungseinrichtung hinsichtlich der Dämpferansteuerung nach erkannten Unwegsamkeiten. Besonders einfach ist eine derartige Anpassung dann, wenn die Erkennungseinrichtung lernfähig ausgebildet ist. Dann kann die Erkennungseinrichtung beispielsweise nach dem Überfahren einer oder mehrerer Unwegsamkeiten unter Berücksichtigung der Fahrgeschwindigkeit selbständig den Abstand zwischen dem Erfassungsbereich der Sensoreinrichtung und dem Vorderrad ermitteln und danach die Dämpferansteuerung justieren.

Möglich ist aber auch, dass ein (vertikales) Verschwenken der Sensoreinrichtung (um eine im Wesentlichen horizontale Achse) und/oder eine sonstige Veränderung des Erfassungsbereichs der Sensoreinrichtung eine manuelle Einstellung an der Erkennungseinrichtung erfordert. Beispielsweise kann an der Sensoreinrichtung eine Lichtquelle angeordnet sein, welche einen Leuchtpunkt in den Erfassungsbereich sendet. Dann kann der Benutzer den Abstand zwischen dem Leuchtpunkt und dem Vorderrad ausmessen und den gemessenen Abstand im Sinne eines Korrekturfaktors über eine Eingabeeinrichtung oder sonstige Schnittstelle in die Erkennungseinrichtung eingeben.

Insbesondere ist die Sensoreinrichtung an wenigstens einer Halteeinrichtung angeordnet, sodass sich eine beabstandete Anordnung zu wenigstens einer Komponente des Fahrrads ergibt. Beispielsweise kann ein Bügel vorgesehen sein. Bevorzugt ist die Beabstandung dabei so ausgelegt, dass die Sensoreinrichtung zwar oberhalb des Vorderrades aber nicht über den Radius des Vorderrades nach vorn hinaussteht. Das hat den Vorteil, dass beim Anstoßen des Vorderrades die Sensoreinrichtung nicht beschädigt wird. Der Bügel kann U-förmig ausgebildet sein. Der Bügel kann an der Achse befestigt sein und die Sensoreinrichtung zum Beispiel oberhalb des Reifens z.B. zentral aufnehmen.

Vorzugsweise ist eine horizontale Breite des erfassten Nahbereichs einstellbar. Dazu kann ein (horizontaler) horizontaler Empfangswinkel einstellbar sein. D. h., es ist eine Breite der Erfassung in einem vorgegebenen Abstand einstellbar. Ein horizontaler Erfassungswinkel kann auch elektrisch und/oder elektronisch einstellbar sein. Elektronisch einstellbar heißt, das nur ein Teil eines Bildes oder eines Zeilenarrays zur Auswertung verwendet wird. Umfasst der Sensor z. B. 4000 (oder 2000) Pixel in der Breite, so kann die Auswertung auf einen bestimmten Teil eingeschränkt werden. Bei der Fahrt über einen engen Pfad kann z. B. in der Breite nur ein geringerer Anteil der verfügbaren Informationen berücksichtigt werden.

Insgesamt kann sowohl eine Länge des Nahbereichs und auch eine des Nahbereichs einstellbar sein. In einfachen Fällen kann bei Einsatz einer Kamera in der Sensoreinrichtung bzw. als Empfangseinheit ein entsprechender Bildausschnitt in Länge und/oder Breite gewählt werden, der ausgewertet wird. So kann ein Nahbereich einfach weiter verkürzt werden. Dadurch werden die zu verarbeitenden Daten reduziert. Der Nahbereich kann auch auf unterschiedliche geometrische Formen eingeschränkt werden. Eine Form des auf einem flachen Boden erfassten Nahbereichs kann eckig, abgerundet und insbesondere rund und vorzugsweise wenigstens zum vorderen Ende (und/oder hinteren Ende) hin oval ausgebildet sein. Im Gelände ändert sich die tatsächlich erfasste Form durch die Unebenheiten des Geländes entsprechend.

In einer weiteren bevorzugten Ausgestaltung ist die Sensoreinrichtung als ein Ultraschallsensor ausgebildet oder umfasst wenigstens einen solchen. Derartige Ultraschallsensoren sind kostengünstig und weisen sehr kompakte Abmessungen auf. Zudem ist mit solchen Sensoren eine Ausgestaltung des Erkennungssystems mit sehr geringem Gewicht möglich, was besonders im Sportradbereich ein wichtiges Merkmal ist. Zudem ist mit Ultraschallsensoren eine zuverlässige Erkennung von Unwegsamkeiten und insbesondere von deren Höhe, Winkel und/oder Abstand möglich. Möglich ist auch, dass die Sensoreinrichtung zwei oder drei oder mehrere Ultraschallsensoren umfasst. So kann beispielsweise ein 2-, 4- und/oder 6-Kanal und/oder MehrKanalsystem vorgesehen sein.

Die Sensoreinrichtung kann auch wenigstens einen Infrarotsensor umfassen oder als ein solcher ausgebildet sein. Auch Infrarotsensoren bieten eine kostengünstige und zuverlässige Sensorik zur Erkennung von Unwegsamkeiten und deren Geometrie bzw. Abstand. Dabei können auch zwei oder drei oder mehr Infrarotsensoren vorgesehen sein.

Möglich ist auch, dass die Sensoreinrichtung als wenigstens ein Radarsensor ausgebildet ist oder wenigstens einen solchen umfasst. Beispielsweise kann die Sensoreinrichtung als ein sog. Ultrabreitbandradarsensor ausgebildet sein. Dabei ist die Sensoreinrichtung dazu ausgebildet, wenigstens einen ultrakurzen Impuls auszusenden und die entsprechenden Reflektionen wieder zu empfangen und auszuwerten. Beispielsweise kann eine Veränderung der Phase, Frequenz, Wellenlänge und/oder Laufzeit zur Erkennung der Unwegsamkeit herangezogen werden.

Vorzugsweise umfasst die Fahrradkomponente wenigstens zwei Stoßdämpfereinrichtungen, wie eine Federgabel und einen Hinterraddämpfer. Insbesondere ist die Erkennungseinrichtung dazu geeignet und ausgebildet ist, wenigstens zwei Stoßdämpfereinrichtungen zu steuern.

In vorteilhaften Weiterbildungen ist wenigstens ein Winkelsensor zur Erkennung eines Lenkeinschlags vorgesehen. Damit kann erkannt werden, ob eine Unwegsamkeit noch umfahren wird. In Abhängigkeit von der Form und Größe der Unwegsamkeit kann die aktuelle Einstellung angepasst werden.

In vorteilhaften und bevorzugten Ausgestaltungen umfasst eine Fahrradkomponente wenigstens alle notwendigen Teile eines Fahrrads. Insbesondere kann die Fahrradkomponente als Fahrrad ausgebildet sein, sodass in einer Ausgestaltung eine Fahrradkomponente ein Fahrrad ist.

Das erfindungsgemäße Fahrrad ist wenigstens teilweise muskelbetrieben. Dabei umfasst es wenigstens eine Fahrradkomponente, welche wie die erfindungsgemäße Fahrradkomponente oder eine ihrer Weiterbildungen ausgebildet ist. Ein solches Fahrrad ermöglicht eine sehr schnelle und selbstständige Anpassung von Dämpfungseigenschaften während der Fahrt, sodass der Fahrer sich ganz auf den Weg und das Fahren konzentrieren kann. Das Fahrrad bietet auch die Vorteile der erfindungsgemäßen Fahrradkomponente.

Das erfindungsgemäße Verfahren eignet sich zum Betreiben einer Fahrradkomponente, welche für ein wenigstens teilweise muskelbetriebenes Fahrrad vorgesehen ist. Das Fahrrad umfasst wenigstens eine Stoßdämpfereinrichtung mit wenigstens einer Dämpfereinrichtung. Die Dämpfereinrichtung ist über wenigstens eine Steuereinrichtung steuerbar. Dabei wird mittels einer Erkennungseinrichtung wenigstens ein Signal erfasst. Anhand des erfassten Signals wird die Unwegsamkeit erkannt. In Abhängigkeit der erkannten Unwegsamkeit wird die Dämpfereinrichtung gesteuert. Dabei wird wenigstens eine Dämpfungseigenschaft der Dämpfereinrichtung eingestellt. Das erfasste Signal kann durch die Unwegsamkeit verändert oder an der Unwegsamkeit reflektiert werden.

Das erfindungsgemäße Verfahren hat den Vorteil, dass Unwegsamkeiten automatisch erkannt und die Stoßdämpfer daraufhin so eingestellt werden, dass die Unwegsamkeiten mit möglichst optimalen Dämpfungseigenschaften überfahren werden.

Vorzugsweise wird mittels der Erkennungseinrichtung wenigstens ein Signal ausgesendet und wenigstens eine von der Unwegsamkeit ausgehende Reflexion des ausgesendeten Signals empfangen und als Signal erfasst.

Nach Erkennung der Unwegsamkeit bis zum Erreichen der Unwegsamkeit wird die Dämpfereinrichtung vorzugsweise härter eingestellt. Insbesondere kann durch die vorausschauende Erkennung einer Unwegsamkeit genügend Federweg für die Unwegsamkeit eingespart werden, sodass eine optimale Dämpfung der Unwegsamkeit erfolgen kann.

Besonders bevorzugt kommt in dem erfindungsgemäßen Verfahren eine Fahrradkomponente zum Einsatz, wie sie in einem der vorhergehenden Ansprüche beschrieben wurde. Besonders bevorzugt ist auch, dass die Dämpfereinrichtung anhand einer steuerbaren Felderzeugungseinrichtung und mittels eines feldempfindlichen rheologischen Mediums eingestellt wird.

Weitere Vorteile und Merkmale der vorliegenden Erfindung ergeben sich aus der Beschreibung der Ausführungsbeispiele, welche mit Bezug auf die beiliegenden Figuren im Folgenden erläutert werden.

In den Figuren zeigen:
- Fig. 1: eine schematische Ansicht eines mit einer erfindungsgemäßen Fahrradkomponente ausgerüsteten Fahrrads;
- Fig. 2: eine schematische Ansicht der Steuerungsstruktur des Fahrrads nach Fig. 1;
- Fig. 2a: eine schematische Ansicht des Fahrrads nach Fig. 1 in einem Gelände;
- Fig. 2b: eine schematische Draufsicht auf ein Fahrrad mit drei eingezeichneten unterschiedlichen Nahbereichen;
- Fig. 3a: eine schematische Ansicht einer Federgabel des Fahrrads nach Fig. 1; und
- Fig. 3b: eine schematische geschnittene Ansicht eines Stoßdämpfers des Fahrrads nach Fig. 1.

Mit Bezug auf die beiliegenden Figuren wird im Folgenden ein Ausführungsbeispiel eines mit einer Fahrradkomponente 401 und mit Stoßdämpfern 100 ausgerüsteten Fahrrads 200 erläutert.

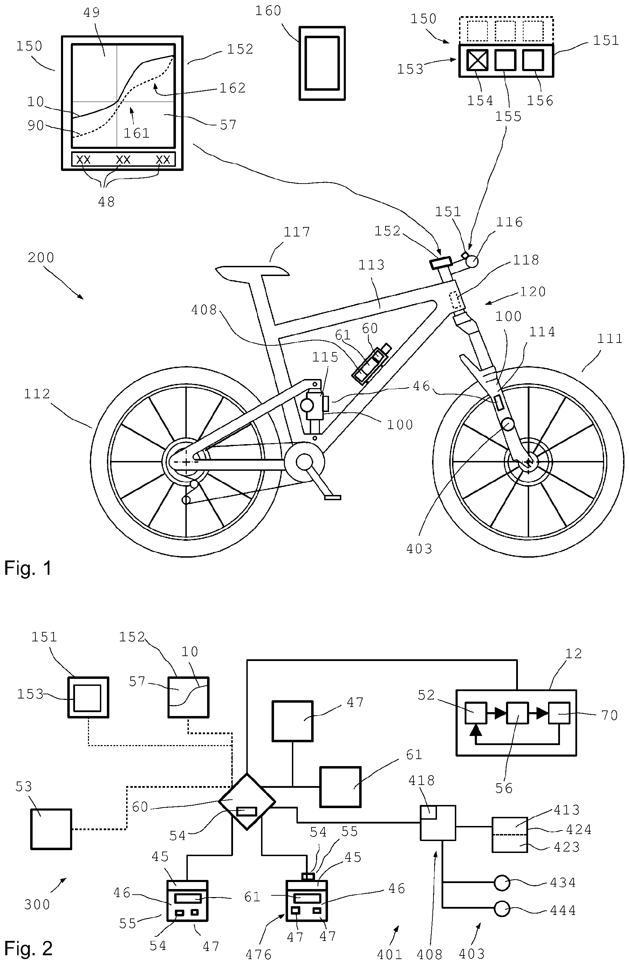

Fig. 1 zeigt eine schematische Darstellung eines Fahrrades 200, welches hier als Mountainbike ausgeführt ist und einen Rahmen 113 sowie ein Vorderrad 111 und ein Hinterrad 112 aufweist. Sowohl das Vorderrad 111 als auch das Hinterrad 112 sind mit Speichen ausgerüstet und können über Scheibenbremsen verfügen. Eine Gangschaltung dient zur Wahl des Übersetzungsverhältnisses. Weiterhin weist das Fahrrad 200 eine Lenkeinrichtung 116 mit einem Lenker auf. Weiterhin ist ein Sattel 117 vorgesehen.

Das Vorderrad 111 verfügt über einen als Federgabel 114 ausgeführten Stoßdämpfer 100 und an dem Hinterrad 112 ist ein als Hinterraddämpfer 115 ausgeführter Stoßdämpfer 100 vorgesehen.

Eine zentrale Steuereinrichtung 60 ist hier zusammen mit einer Batterieeinheit 61 in einem trinkflaschenartigen Behälter vorgesehen und an dem Unterrohr angeordnet, wo sonst eine Trinkflasche angeordnet ist, kann aber auch im Rahmen vorgesehen werden. Die zentrale Steuereinrichtung 60 kann auch an dem Lenker 116 angeordnet werden.

Die zentrale Steuereinrichtung 60 dient als Fahrwerksteuerung 200 und steuert hier sowohl die Federgabel 114 als auch den Hinterradstoßdämpfer 115 jeweils separat und hier insbesondere synchron. Die Steuerung der Stoßdämpfer 100 und weiterer Fahrradkomponenten kann in Abhängigkeit verschiedenster Parameter erfolgen und erfolgt auch anhand von sensorischen Daten. Gegebenenfalls können auch die Feder- und/oder Dämpfungseigenschaften der Sattelstütze eingestellt werden. Es ist möglich, dass mit der zentralen Steuereinrichtung 60 auch die Schaltung zum Einstellen verschiedener Übersetzungen gesteuert werden kann. Zur Erfassung einer Winkellage kann ein Winkelsensor 118 vorgesehen sein, der in Längs- und/oder Querrichtung eine Winkellage des Fahrrades 200 detektiert.

Zusätzlich weist hier jeder Stoßdämpfer 100 wenigstens eine Steuereinrichtung 46 an einer austauschbar vorgesehenen Elektronikeinheit auf. Die Elektronikeinheiten können jeweils separate Batterieeinheiten aufweisen. Bevorzugt ist aber eine Energieversorgung durch die zentrale Batterieeinheit 61 oder die Unterstützung oder der Betrieb durch einen Dynamo oder dgl.

Die Fahrwerksteuerung 200 und die zentrale Steuereinrichtung 60 werden über Bedieneinrichtungen 150 bedient. Es sind zwei Bedieneinrichtungen 150 vorgesehen, nämlich eine Betätigungseinrichtung 151 und eine Einstelleinrichtung 152. Die Betätigungseinrichtung 151 weist mechanische Eingabeeinheiten 153 an den seitlichen Enden oder in der Nähe der seitlichen Enden des Lenkers 116 auf. Die Einstelleinrichtung 152 kann als Fahrradcomputer ausgeführt sein und ebenfalls am Lenker 116 positioniert werden. Möglich ist es aber auch, dass ein Smartphone 160, oder ein Tablett oder dergleichen als Einstelleinrichtung 152 eingesetzt wird und beispielsweise in der Tasche oder in dem Rucksack des Benutzers aufbewahrt wird, wenn keine Veränderung der Einstellungen vorgenommen wird.

Die Betätigungseinrichtung 151 umfasst hier drei mechanische Eingabeeinheiten als Bedienelemente 154, 155, 156 zur Bedienung des Stoßdämpfers 100. Es ist möglich, dass für die Federgabel 114 eine Betätigungseinrichtung 151 an einem Ende des Lenkers 116 angeordnet ist und das an dem anderen Ende des Lenkers eine entsprechende weitere Betätigungseinrichtung 151 für den Hinterradstoßdämpfer 115 vorgesehen ist. Möglich ist es auch, dass beide Stoßdämpfer mit einer Betätigungseinrichtung 151 synchron gesteuert werden. Möglich ist es auch, dass an einem seitlichen Ende des Lenkers 116 eine Betätigungseinrichtung mit beispielsweise sechs unterschiedlichen Bedienelementen zur Einstellung beider Stoßdämpfer 100 angeordnet ist.

Die Betätigungseinrichtung 151 ist erheblich robuster und widerstandsfähiger ausgeführt als die Bedieneinrichtung 152 und wird hier fest an dem Lenker 116 anmontiert. Die einzelnen als Druckschalter oder Taster ausgeführten Bedienelemente 154 bis 156 weisen jeweils Schutz gemäß IP54 oder besser IP67 nach DIN EN 60529 auf. Es liegt ein Schutz gegen Stöße von mindestens IK06 gemäß DIN EN 622622 vor. Damit sind die Bedienelemente 154 bis 156 im normalen Betrieb ausreichend geschützt, sodass eine Beschädigung der Bedienelemente im Betrieb auch bei normalen Stößen oder dergleichen nicht erfolgt. Außerdem sorgen die robusten Bedienelemente 154 bis 156 für eine zuverlässige Bedienung auch bei Downhillfahrten oder dergleichen.

Die Einstelleinrichtung 152 hingegen, die beispielsweise am Lenker angeklipst wird oder die in der Tasche oder in einem Rucksack des Benutzers verbleibt, bietet erheblich mehr und/oder übersichtlichere Einstellmöglichkeiten und kann dazu eingesetzt werden, eine angezeigte Dämpferkennlinie 10 in wenigstens zwei oder mehr Bereichen 161, 162 etc. zu verändern, um die gewünschten Dämpfereigenschaften einzustellen. Die Einstelleinrichtung 150 weist ein Display bzw. eine Anzeige 49 auf und kann auch Daten 48 ausgeben, die beispielweise die Dämpfereinstellungen betreffen oder aber Daten über die aktuelle Fahrgeschwindigkeit etc. enthalten. Neben oder anstelle der Veränderung der Dämpfung kann über die Einstelleinrichtungen 150 und 152 auch wenigstens eine Federeigenschaft oder die Charakteristik der Federung verändert werden. Dabei kann insbesondere die Federhärte beim Ein- und oder Ausfedern beeinflusst werden. Außerdem kann gegebenenfalls die Ruhelage eingestellt werden. Beispielsweise kann ein Absenken der Federgabel 114 bei (steilen) Bergfahrten vorgenommen werden, wodurch der Neigungswinkel des Fahrrads 200 verringert wird.

Das Display 49 ist insbesondere als grafische Bedieneinheit oder Touchscreen 57 ausgeführt, sodass der Benutzer beispielsweise eine dargestellte Dämpferkennlinie 10 mit den Fingern berühren und durch Ziehen ändern kann. Dadurch kann aus der durchgezogen dargestellten Dämpferkennlinie 10 durch Berühren an einem oder mehreren Punkten die dargestellte Dämpferkennlinie 90 erzeugt werden, die dann ab sofort für die Fahrzeugsteuerung 300 eingesetzt wird. Die Veränderung der Dämpferkennlinien 10, 90 ist auch während der Fahrt möglich. Hier wird nicht nur die Dämpfung verändert, sondern es kann auch gleichzeitig oder aber auch nur die Federung verändert werden.

Die Einstelleinrichtung 152 kann auch als Fahrradcomputer dienen und Informationen über die aktuelle Geschwindigkeit, sowie über die Durchschnittsgeschwindigkeit und/oder die Tage-, Tour, Runden- und Gesamtkilometer anzeigen. Möglich ist auch die Anzeige der aktuellen Position, der momentanen Höhe der gefahrenen Strecke sowie des Streckenprofils und auch eine mögliche Reichweite unter den aktuellen Dämpfungsbedingungen.

Das hier gezeigte Fahrrad 200 ist mit einer erfindungsgemäßen Fahrradkomponente 401 ausgestattet. Das gezeigte Fahrrad 200 weist zudem ein Fahrwerk auf, welches in Verbindung mit der Fahrradkomponente 401 nach dem erfindungsgemäßen Verfahren gesteuert werden kann.

Die Fahrradkomponente 401 umfasst in der hier gezeigten Ausgestaltung eine Erkennungseinrichtung 408, welche in die zentrale Steuereinrichtung 60 integriert ist. Die Erkennungseinrichtung 408 kann aber auch separat ausgebildet und an einem beliebigen geeigneten Ort am Fahrrad 200 untergebracht sein. Die Fahrradkomponente 401 umfasst hier zudem eine berührungslos arbeitende Sensoreinrichtung 403, welche hier einen an der Federgabel 114 angebrachten Ultraschallsensor 424 umfasst. Die Sensoreinrichtung 403 wird bei jeder Lenkbewegung mitverschwenkt, sodass die Sensoreinrichtung 403 jederzeit den Bereich direkt vor dem Vorderrad erfasst. Die Sensoreinrichtung 403 ist hier über eine nicht gezeigte Leitung mit der Erkennungseinrichtung 408 verbunden. Alternativ kann auch eine drahtlose Kommunikation zwischen Sensoreinrichtung 403 und Erkennungseinrichtung 408 vorgesehen sein.

Im Betrieb sendet die Sensoreinrichtung 403 ein Ultraschallsignal aus und empfängt dessen Reflektion. Die Erkennungseinrichtung 408 wertet das empfangene Signal aus und erkennt so, ob es sich bei der Quelle der Reflektion um eine Unwegsamkeit im Gelände handelt. Dabei wird das reflektierte Signal insbesondere auch von der Erkennungseinrichtung 408 derart ausgewertet, dass eine Charakterisierung der Unwegsamkeit möglich ist. Als Folge einer erkannten bzw. charakterisierten Unwegsamkeit liefert die Erkennungseinrichtung 408 ein entsprechendes Steuersignal an die zentrale Steuereinrichtung 60.

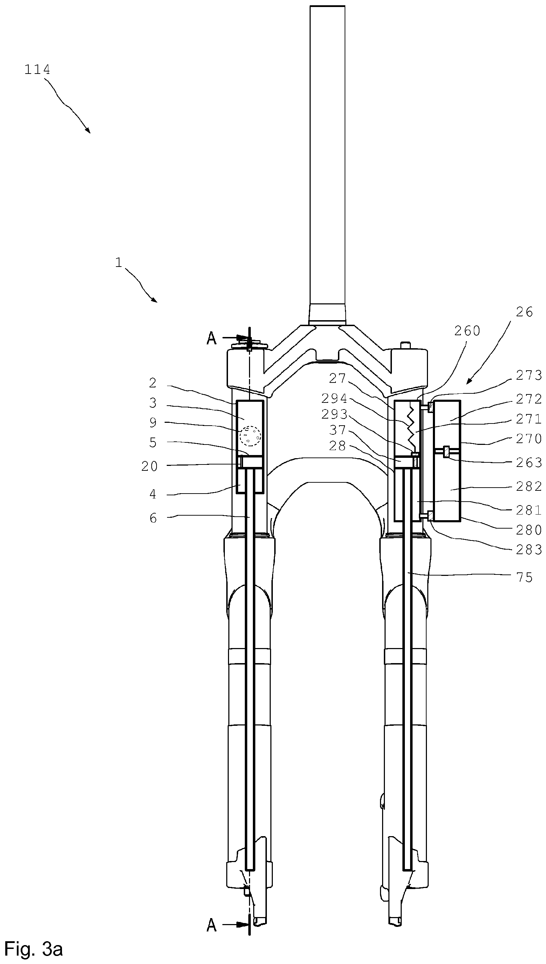

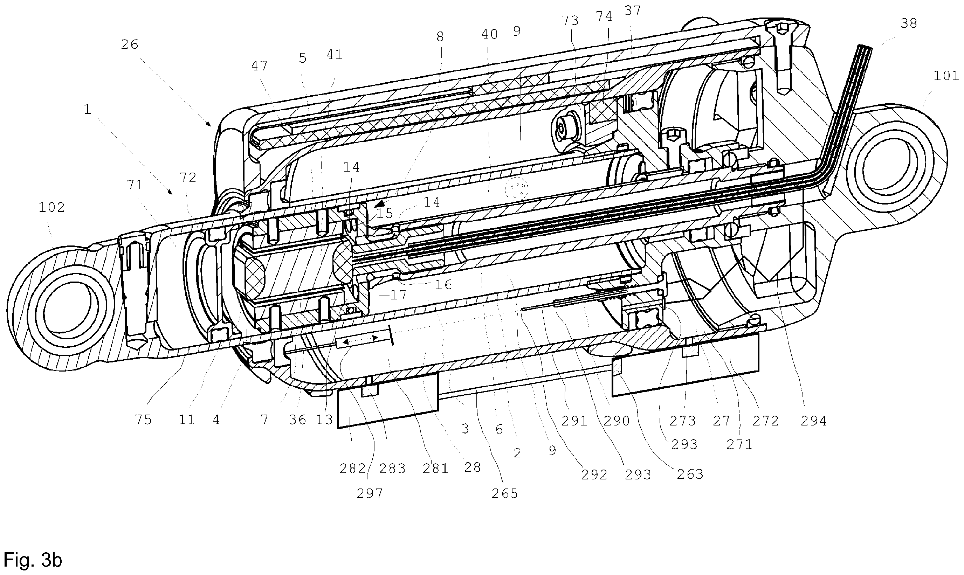

Die zentrale Steuereinrichtung 60 beeinflusst daraufhin die hier als Federgabel 114 ausgebildete erste Dämpfereinrichtung. Die Einstellung der Dämpfereinrichtung 100 durch die Steuereinrichtung 60 wird mit Bezug zu den Figuren 3a und 3b näher erläutert.

Als Reaktion auf die erkannte Unwegsamkeit steuert die Erkennungseinrichtung 408 in Verbindung mit der zentralen Steuereinheit 60 die als Hinterraddämpfer 115 ausgebildete zweite Dämpfereinrichtung zeitversetzt zu der Federgabel 114 an. Der Zeitversatz zwischen der Ansteuerung der Federgabel 114 und dem Hinterraddämpfer 115 wird von der Erkennungseinrichtung 408 ebenfalls in Verbindung mit der Steuereinrichtung 60 in Abhängigkeit der Fahrgeschwindigkeit bestimmt. Zur Bestimmung der Fahrgeschwindigkeit sind entsprechende Sensoren an wenigstens einem der Räder 111, 112 angeordnet und mit der zentralen Steuereinrichtung 60 wirkverbunden. Die Bestimmung der Fahrgeschwindigkeit kann auch über ein GPS-Signal erfolgen.

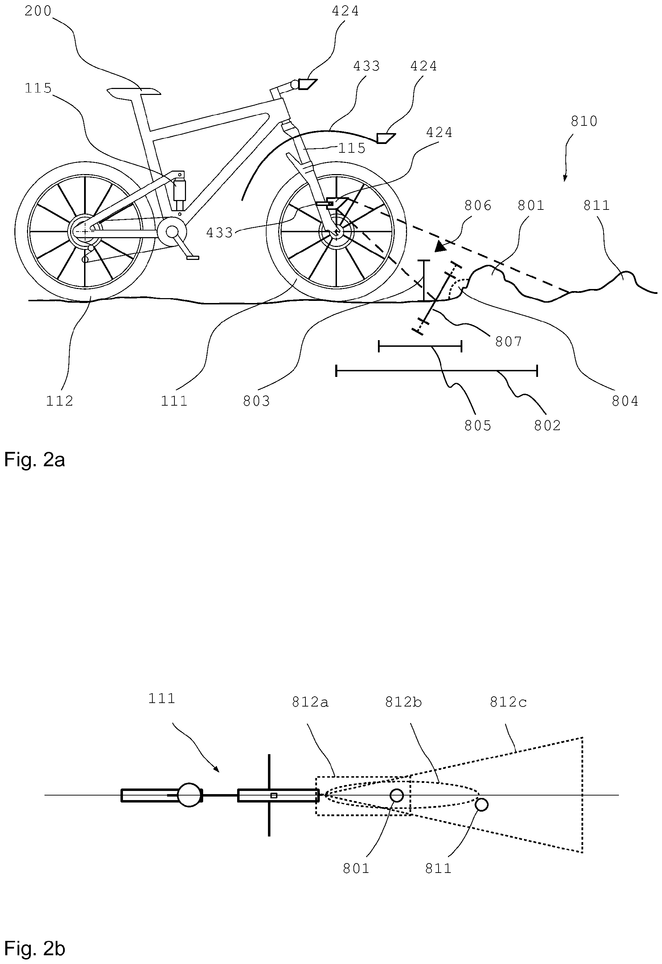

Figur 2 zeigt eine schematische Darstellung der Fahrwerksteuerung 300 und der Kommunikationsverbindungen einiger beteiligter Komponenten. Die zentrale Steuereinrichtung 60 kann drahtgebunden oder drahtlos mit den einzelnen Komponenten verbunden sein. Beispielsweise kann die Steuereinrichtung 60 über WLAN, Bluetooth, ANT+, GPRS, UMTS, LTE oder sonstige Übertragungsstandards mit den anderen Komponenten verbunden sein. Gegebenenfalls kann die Steuereinrichtung 60 über die gepunktet dargestellte Verbindung mit dem Internet 53 drahtlos verbunden sein.

Die Steuereinrichtung 60 ist mit der Batterieeinheit 61 verbunden. Weiterhin kann die Steuereinrichtung 60 mit einer Sensoreinrichtung 47 oder mit mehreren Sensoren verbunden sein. Wenigstens zeitweise sind die Bedieneinrichtungen 150, nämlich die Betätigungseinrichtung 151 und die Einstelleinrichtung 152 drahtgebunden oder drahtlos mit der Steuereinrichtung 60 gekoppelt. Die Betätigungseinrichtung 151 ist vorzugsweise drahtgebunden an die Steuereinrichtung gekoppelt, kann aber auch drahtlos angebunden sein und über eine separate Batterie wie eine Knopfzelle oder dergleichen verfügen.

Die robust aufgebaute Betätigungseinrichtung 151 verfügt über wenigstens eine mechanische Eingabeeinheit 153 in Form eines Schalters oder dergleichen, um darüber einen Umstellbefehl an die Steuereinrichtung 60 zur Umschaltung wenigstens einer Dämpfer- und/oder Federeigenschaft auszugeben. Das kann beispielsweise die Aktivierung eines Lockouts oder die Aktivierung einer Wippunterdrückung oder die Verstellung der Dämpferhärte und/oder der Federhärte sein. Vorzugsweise ist für jede dieser Eigenschaften ein separater Bedienknopf oder dergleichen vorgesehen. Es ist aber auch möglich, dass eine einzelne mechanische Eingabeeinheit 153 zum Umschalten der einzelnen Möglichkeiten verwendet wird. Die mechanische Eingabeeinheit 153 oder eine mechanische Eingabeeinheit kann zur Veränderung der Federungseigenschaften dienen. Beispielsweise kann die Federgabel abgesenkt und der Hinterraddämpfer entsprechend angepasst werden.

Die Einstelleinrichtung 152 verfügt hier über eine grafische Bedieneinheit wie einen berührungsempfindlichen Bildschirm und kann unter anderen auf dem Display 49 die aktuelle Dämpferkennlinie 10 darstellen. Durch beispielsweise Berühren und Ziehen der Dämpferkennlinie an einzelnen Punkten kann die Dämpferkennlinie 10 grundsätzlich beliebig seitlich oder in der Höhe verschoben werden. Vorzugsweise werden die einzelnen Punkte linear verbunden. Möglich ist auch eine dynamische Verbindung der einzelnen Punkte über Splines, sodass eine abgerundete Dämpferkennlinie vorliegt.

Die Steuereinrichtung 60 ist über Netzwerkschnittstellen 54 oder Funknetzschnittstellen 55 mit Steuereinrichtungen 46 der Stoßdämpfer 100 am Vorderrad und am Hinterrad verbunden. Die möglicherweise an jedem Stoßdämpfer 100 vorgesehene Steuereinrichtung 46 sorgt für die lokale Steuerung und kann jeweils eine Batterie aufweisen oder aber mit der zentralen Batterieeinheit 61 verbunden sein. Bevorzugt ist es, dass die Steuerung beider Stoßdämpfer über die Steuereinrichtung 60 erfolgt.

Vorzugsweise ist jedem Stoßdämpfer 100 wenigstens eine Sensoreinrichtung 47 zugeordnet, um Relativbewegungen zwischen den Komponenten 101 und 102 zu erfassen und insbesondere eine Relativposition der Komponenten 101 und 102 relativ zueinander zu bestimmen. Die Sensoreinrichtung 47 kann als Wegsensor ausgebildet sein oder einen solchen umfassen. Anhand der in der Speichereinrichtung 45 abgelegten Dämpferkennlinie 10 des Stoßdämpfers 100 wird nach Ermittlung eines Kennwerts für die Relativgeschwindigkeit die zugehörige Dämpfungskraft und eine passende Federkraft eingestellt. Eine passende Federkraft kann über das Gewicht des Fahrers ermittelt werden. Beispielsweise kann durch automatische Ermittlung der SAG-Position nach dem Aufsetzen eines Fahrers das Gewicht des Fahrers abgeleitet werden. Aus dem Einfederungsweg beim Aufsetzen des Fahrers auf das Fahrrad kann auf einen geeigneten Luftdruck in der Fluidfeder bzw. Gasfeder geschlossen werden, der dann automatisch sofort oder im Laufe des Betriebs eingestellt oder angenähert wird.

In Figur 2 ist der Steuerkreislauf 12 schematisch dargestellt, der in der Speichereinrichtung 45 abgelegt ist und in der Steuereinrichtung 60 hinterlegt oder einprogrammiert ist. Der Steuerkreislauf 12 wird im Betrieb periodisch und insbesondere kontinuierlich periodisch durchgeführt. Im Schritt 52 wird mit den Sensoren 47 eine aktuelle Relativbewegung bzw. Relativgeschwindigkeit der ersten Komponente 101 zur zweiten Komponente 102 erfasst. Aus den Werten des Sensors 47 oder der Sensoren wird im Schritt 52 ein Kennwert abgeleitet, der repräsentativ für die aktuelle Relativgeschwindigkeit ist. Im Schritt wird dann anschließend aus dem aktuellen bzw. ermittelten Kennwert unter Berücksichtigung der vorbestimmten oder ausgewählten Dämpferkennlinie die zugehörige einzustellende Dämpfungskraft abgeleitet. Daraus wird ein Maß für die aktuell einzustellende Feldstärke bzw. Stromstärke abgeleitet, mit welcher die einzustellende Dämpfungskraft wenigstens näherungsweise erreicht wird. Das Maß kann die Feldstärke selbst sein oder aber z. B. die Stromstärke angeben, mit welcher die einzustellende Dämpfungskraft wenigstens etwa erreicht wird.

Im darauf folgenden Schritt 70 wird die aktuell einzustellende Feldstärke erzeugt oder die entsprechende Stromstärke an die elektrische Spuleneinrichtung 11 als Felderzeugungseinrichtung angelegt, sodass innerhalb eines einzelnen Zyklus bzw. einer Zeitperiode des Steuerkreislaufes 12 die Dämpfungskraft erzeugt wird, die bei der gewählten oder vorbestimmten Dämpferkennlinie zu der aktuellen Relativgeschwindigkeit der ersten Komponente zu der zweiten Komponente vorgesehen ist. Anschließend startet der nächste Zyklus und es wird wieder Schritt 52 durchgeführt. In jedem Zyklus oder in bestimmten zeitlichen Abständen oder bei bestimmten Ereignissen wird die Position oder die Federkraft der Federeinrichtung 26 überprüft. Dazu wird bei der Fluidfeder 260 (vgl. Fig. 3a und 3b) die Stärke der Federkraft der Positivkammer 270 und die Stärke der Federkraft der Negativkammer 280 überprüft oder ermittelt. Wird eine härtere Fluidfeder 261 gewünscht, kann beispielsweise die zweite Positivkammer 272 abgeschaltet werden, sodass die Fluidfeder 260 einen steileren Verlauf der Federkraft erhält. Oder es wird das Volumen der Negativkammer 280 verändert oder es wird eine Position 292 der Ausgleichseinrichtung 290 verändert.

Die hier gezeigte zentrale Steuereinrichtung 60 ist zudem mit der erfindungsgemäßen Fahrradkomponente 401 wirkverbunden. Die Fahrradkomponente 401 besteht aus der Erkennungseinrichtung 408 und einem Ultraschallsensor 424. Der Ultraschallsensor 424 kann hier ein Ultraschallsignal aussenden und dieses Signal auch wieder empfangen. Der Sensor 424 vereint somit eine Sendeeinheit 413 und eine Empfangseinheit 423 in einem Bauteil. Dadurch ist eine besonders unauffällige und platzsparende Unterbringung möglich. Das ist besonders bei Sportfahrrädern von Vorteil, bei denen erhöhter Wert auf ein geringes Gewicht und gute aerodynamische Eigenschaften gelegt wird. Zudem wird auch das äußere Erscheinungsbild des Fahrrads 200 nicht beeinträchtigt.

Alternativ kann die Erkennungseinrichtung 408 auch mit einem Infrarotsensor 434 verbunden sein. Es kann auch ein Radarsensor 444 vorgesehen sein. Die Erkennungseinrichtung 408 weist hier auch eine integrierte Speichereinrichtung 418 auf. Damit ist eine Hinterlegung der erkannten Unwegsamkeiten sowie der daraufhin vorgenommenen Dämpfereinstellungen möglich. Diese können dann später z. B. von einem Benutzer über eine entsprechende Schnittstelle wie z. B. ein Smartphone 160 abgerufen werden. Des Weiteren greift die Erkennungseinrichtung 408 hier auf Daten eines Sensormoduls 476 zurück, welches als Dämpfersensor 47 ausgebildet ist. Die Erkennungseinrichtung 408 berücksichtigt dabei die erfassten Werte des Dämpfersensors 47, um die Dämpferauslastung überwachen zu können.

Die Figur 2a zeigt das Fahrrad 200 der Figur 1 in einem stark schematisierten Gelände. Entlang der Fahrstrecke des Fahrrads 200 befinden sich hier Unwegsamkeiten 801, 811, welche als Erhebungen bzw. Unebenheiten am Boden skizziert sind. Solche Unwegsamkeiten können beispielsweise sein: Steine, Stufen, Wurzeln, Senken, Bodenwellen, Schlaglöcher, Absätze, Erhebungen, Bordsteinkanten, Kopfsteinpflaster, Baumstümpfe, Äste und Baumstämme.

An der Federgabel 114 ist hier ein Ultraschallsensor 424 mittels einer Halteeinrichtung 433 angebracht. Dabei ist die Halteeinrichtung 433 so bemessen, dass sie nicht über das Vorderrad 111 hinaus nach vorne steht. Dadurch wird eine Beschädigung der Sensoreinrichtung 403 bei einem Anstoßen mit dem Vorderrad 111 vermieden.

Durch ein Verschwenken des Sensors 424 an der Halteeinrichtung 433 um eine horizontale Achse kann der Erfassungsbereich 806 des Sensors 424 optimal ausgerichtet werden. Eine solche Ausrichtung findet vorzugsweise einmalig bei der Installation der Fahrradkomponente 401 statt. Möglich ist dabei auch, dass der Benutzer nach seinen Wünschen eine Ausrichtung des Erfassungsbereichs 806 selbst vornehmen kann.

Beispielhaft ist auch eine weitere Sensoreinrichtung 403 im Bereich des Lenkers 116 angeordnet. Als weiteres Beispiel ist eine Sensoreinrichtung 403 vorgesehen, welche vorne an einer als Schutzblech bzw. Schmutzfänger ausgebildeten Halteeinrichtung 433 befestigt ist. Die Halteeinrichtung 433 ist z. B. an der Gabelbrücke der Federgabel 114 befestigt. Als Alternative ist eine Sensoreinrichtung 403 an einem Ausfallende der Federgabel 114 bzw. der Achse einer Vorderradnabe befestigt.

Die hier gezeigten beispielhaften Anordnungen der Sensoreinrichtung 403 dienen der Veranschaulichung. Tatsächlich ist bevorzugt, dass an einem Fahrrad 200 lediglich eine Sensoreinrichtung 403 vorgesehen ist. Dabei kann die Sensoreinrichtung 403 jedoch mehrere Sensoren umfassen. Beispielsweise können in einer Sensoreinrichtung 403 vier oder sechs Ultraschallsensoren 424 vorgesehen sein, so dass die Auflösung verbessert bzw. der Erfassungsbereich 806 erweitert werden kann.

Die hier gezeigten Positionen zur Anbringung der Sensoreinrichtungen 403 haben den Vorteil, dass die Sensoren zusammen mit den Komponenten, an denen sie angebracht sind, bei einer Lenkbewegung direkt mit verschwenkt werden können. So sind die Sensoreinrichtungen 403 und damit der Erfassungsbereich 806 in die Richtung geschwenkt, in welche auch das Vorderrad läuft. Es kann aber auch eine Sensoreinrichtung 403 am Steuerrohr oder anderen Teilen des Fahrrads 200 vorgesehen sein, welche bei einer Lenkbewegung nicht verschwenkt werden. Die Ausrichtung der Sensoreinrichtung 403 zum Boden ist dabei je nach Typ und Bauart des Sensors festzulegen bzw. im Vorfeld zu ermitteln.

Möchte der Fahrer die Erkennungseinrichtung 408 nutzen, kann er diese über die Bedieneinrichtung 150 aktivieren. Die Erkennungseinrichtung 408 sendet dann über den Sensor 424 Ultraschallwellen in den Erfassungsbereich 806 aus. Ist der im Erfassungsbereich 806 liegende Geländeabschnitt frei von Unwegsamkeiten, wird das von der Erkennungseinrichtung 408 anhand der reflektierten Ultraschallwellen erkannt. Die Erkennungseinrichtung 408 nimmt dann keinerlei Veränderungen der Dämpfereinstellung vor. Die Dämpfereinrichtungen 1 sind dabei so eingestellt, wie es die Fahrwerksteuerung 300 im Normalbetrieb vorsieht oder es den gewünschten Vorgaben des Benutzers entspricht.

Taucht nun bei der weiteren Fahrt eine Unwegsamkeit 801 im Erfassungsbereich 806 auf, kommt es zu einer veränderten Reflektion der Ultraschallwellen. Die Signalveränderung wird von der Erkennungseinrichtung 408 registriert und ausgewertet. Anhand der Auswertung kann insbesondere die Höhe 803 der Unwegsamkeit über dem Boden sowie die Entfernung 805 der Unwegsamkeit zum Vorderrad 111 bestimmt werden. Anhand der reflektierten Signale kann auch der Winkel 804 einer zum Fahrrad 200 zeigenden Fläche der Unwegsamkeit ermittelt werden. Möglich ist z. B. auch, dass die Form bzw. die dreidimensionale Geometrie der Unwegsamkeit wenigstens näherungsweise charakterisiert wird.

Anhand der Entfernung 805 ermittelt die Erkennungseinrichtung 803 den optimalen Zeitpunkt, um die Dämpfereinstellung für den zu erwartenden Stoß mit der Unwegsamkeit 801 einzustellen. Bis zum Erreichen der Unwegsamkeit 801 bleibt die Dämpfereinstellung vorzugsweise unverändert, damit die besten Fahreigenschaften für einen normalen bzw. ebenen Untergrund erzielt werden. Erreicht das Vorderrad 111 nun die Unwegsamkeit 801 steuert die Erkennungseinrichtung 408 die zentrale Steuereinrichtung 60 an, sodass die Dämpfung in Richtung weich verstellt wird. Dabei können Parameter wie die Höhe 803 oder Winkel 804 herangezogen werden, um den Dämpfer genau um das Maß weicher einzustellen, wie es für eine derartige Unwegsamkeit optimal ist.

Erfolgt die Einstellung der Dämpfereinrichtung 1 beispielsweise über das Anlegen einer Feldstärke an ein magnetorheologisches Fluid 9, so kann aufgrund der besonders schnellen Reaktionszeit die Dämpferanpassung unmittelbar vor dem Auftreffen des Vorderrades 111 erfolgen. Die Dämpfereinrichtungen 1 mit derart kurzen Reaktionszeiten eignen sich besonders gut für die Verwendung mit der Erkennungseinrichtung 408, da der Erfassungsbereich 806 auf einen möglichst kurzen Nahbereich 802 fokussiert werden kann. Dadurch kann eine unerwünschte Erkennung von Unwegsamkeiten 801 vermieden werden, welche nach einer spontanen Lenkbewegung gar nicht mehr überfahren werden.

Je kürzer sich der Nahbereich 802 vor dem Vorderrad 111 erstreckt, desto wahrscheinlicher ist es, dass die erkannten Unwegsamkeiten 801 überfahren werden und nicht etwa nach einem Richtungswechsel lediglich umfahren werden. Aufgrund der sehr kurzen Reaktionszeit der hier vorgestellten Dämpfereinstellung können beispielsweise Nahbereiche 802 realisiert werden, welche sich über eine Distanz erstrecken, die das Fahrrad 200 in einer Sekunde oder sogar nur eine Zehntelsekunde zurücklegt. Die Einstellzeit der Dämpfereinrichtung 1 beträgt dabei vorzugsweise weniger als 10 Millisekunden. Dabei kann der Nahbereich 802, in welchem Unwegsamkeiten 801 erkannt werden und eine Dämpfereinstellung auslösen können, durch die Erkennungseinrichtung 408 dynamisch in Abhängigkeit der jeweiligen Fahrgeschwindigkeit angepasst werden.

Ist die Unwegsamkeit 801 überwunden und befindet sich im Nahbereich 802 keine weitere Unwegsamkeit 811, so wird die Dämpfereinrichtung 1 wieder in die entsprechende Grundeinstellung für ebenes Gelände zurückgesetzt. Durch die Fokussierung des Erfassungsbereichs 806 auf einen sehr kurzen Nahbereich 802 werden außerhalb des Nahbereichs 802 liegende Unwegsamkeiten 811 nicht erfasst. Das ist jedoch keineswegs von Nachteil, da beim Radfahren im Gelände häufige und schnelle Richtungswechsel auftreten. Daher ist es nicht unwahrscheinlich, dass weiter entfernt liegende Unwegsamkeiten 811 gar nicht überfahren werden, sondern umfahren werden. Der kurze Nahbereich 802 hat somit den Vorteil, dass die Dämpfereinrichtung 1 auch genau auf den Untergrund eingestellt wird, welcher überfahren wird.

Die Breite 807 und/oder die Länge des Erfassungsbereichs 806 bzw. des "überwachten" Nahbereichs 802 sind vorzugsweise einstellbar. So zeigt Fig. 2a schematisch mit der durchgezogenen Linie eine schmalere Breite 807 und mit der punktierten Linie eine größere Breite 807. Zur Einstellung der Breite 807 (bzw. des zugehörigen Erfassungswinkels) und/oder der Länge kann Bei Einsatz einer Kamera beispielsweise jeweils nur ein Ausschnitt der tatsächlich erfassten Bildfläche zur Auswertung verwendet werden. Je nach Anzahl der in der Breitenrichtung bzw. Längsrichtung berücksichtigten Pixel wird ein entsprechender horizontaler bzw. vertikaler Erfassungswinkel ausgewertet.

Nachdem das Vorderrad 111 die Unwegsamkeit 801 passiert hat, berechnet die Erkennungseinrichtung 408 anhand der aktuellen Fahrgeschwindigkeit den Zeitpunkt, zu welchem das Hinterrad 112 die Unwegsamkeit 801 erreichen wird. So kann die zweite Dämpfereinrichtung 620 des Hinterrads 112 ebenfalls zu einem optimalen Zeitpunkt auf den von der Unwegsamkeit 801 verursachten Stoß vorbereitet werden.

Die hier gezeigte Erkennungseinrichtung 408 kommuniziert mit einem Sensormodul 476 der Dämpfereinrichtung 1, welches als Dämpfersensor 47 ausgebildet ist. Wie zuvor beschrieben ist dieser Sensor 47 für die Ermittlung einer Relativgeschwindigkeit zweier sich zueinander bewegender Komponenten 101, 102 vorgesehen. Anhand der mit diesem Sensor 47 erfassten Relativgeschwindigkeit kann von der Erkennungseinrichtung 408 selbständig überwacht werden, ob die vorgenommene Dämpfereinstellung für die überfahrene Unwegsamkeit 801 adäquat war oder nicht.

Überfährt das Fahrrad 200 beispielsweise eine Unwegsamkeit 801 und kommt es dabei zu einer nicht optimalen Auslastung der Dämpfereinrichtung 1, so erkennt die Erkennungseinrichtung 408 dies anhand der unpassenden Relativgeschwindigkeit der Dämpferkomponenten 101, 102. Tritt dann nachfolgend eine vergleichbare Unwegsamkeit 801 auf, nimmt die Überwachungseinrichtung 408 die Dämpfereinstellung unter Berücksichtigung eines geeigneten Korrekturfaktors vor. Ist die daraufhin gemessene Relativgeschwindigkeit der Dämpferkomponenten 101, 102 im Sollbereich, behält die Erkennungseinrichtung 408 den Korrekturfaktor bei. Befindet sich die Dämpferauslastung erneut außerhalb des Sollbereichs, passt die Erkennungseinrichtung 408 den Korrekturfaktor um ein bestimmtes Maß an.

Die Erkennungseinrichtung 408 ist hier mit einer Speichereinrichtung 418 ausgestattet, damit die Eigenschaften der erkannten Unwegsamkeit 801 und die daraufhin vorgenommenen Dämpfereinstellungen sowie mögliche Korrekturfaktoren hinterlegt werden können. Das ermöglicht einerseits eine besonders einfache Wartung und Kontrolle durch den Service, welcher die Speichereinrichtung 418 über eine geeignete Schnittstelle auslesen kann.

Zudem bietet es aber auch dem Fahrer hilfreiche Informationen, die er beispielsweise über sein Smartphone 160 aus der Speichereinrichtung 418 abrufen kann. Besonders bevorzugt werden die in der Speichereinrichtung 418 hinterlegten Informationen mit Positionsdaten verknüpft, welche beispielsweise aus einem GPSfähigen Smartphone 160 hinzugezogen werden können. Anhand dieser Daten kann der Benutzer in Verbindung mit digitalen Karten sehr detaillierte Streckenprofile erstellen, die anhand der gespeicherten Unwegsamkeiten ein sehr anschauliches Bild über die vorherrschenden Boden- bzw. Geländeverhältnisse bieten. Die Erkennungseinrichtung kann somit auch zur Verbesserung von Kartenmaterial für Radtouren und Parcours eingesetzt werden. Während des Betriebs aufgenommene Daten können lokal in einer Speichereinrichtung 418 gespeichert werden. Dabei können die Daten (erkannte Unwegsamkeiten 801 und/oder Rohdaten) zusammen mit Zeitdaten über den Aufnahmezeitpunkt und/oder mit GPS- und/oder Streckendaten entweder lokal und/oder direkt und/oder später manuell oder automatisch in einem Speicher 45 im Internet 53 gespeichert werden. Das ermöglicht die spätere Analyse und auch den Vergleich mit Teamkollegen oder Freunden oder auch mit früheren Fahrten.

Es ist auch möglich, dass die Erkennungseinrichtung 408 zur Erkennung eines Sprungs des Fahrrads 200 ausgebildet ist. Ein Sprung kann beispielsweise dadurch erfasst werden, dass keine oder nur eine sehr geringe Reflexion auftritt. Eine derartige Erkennung von fehlendem Boden unter dem Vorderrad 111 hat den Vorteil, dass die Dämpfereinrichtung 1 auf das Aufsetzen des Fahrrads 200 nach dem Sprung optimal eingestellt werden kann. Zur Erkennung, ob das Fahrrad 200 nach dem Sprung zuerst mit dem Vorderrad 111 oder dem Hinterrad 112 aufsetzt, kann die Erkennungseinrichtung 408 wenigstens einen Lagesensor oder dergleichen aufweisen.

In einer anderen Ausgestaltung ist die Sensoreinrichtung 403 vorzugsweise mit einer als Kamera ausgebildeten Empfangseinheit 423 ausgestattet. Mit einer solchen Empfangseinheit 423 werden optische Projektionen der Unwegsamkeit erfasst und zur Erkennung von Unwegsamkeiten durch die Erkennungseinrichtung 408 herangezogen. Eine Sendeeinheit 413 ist dabei nicht unbedingt erforderlich und kann gegebenenfalls weggelassen werden, kann aber auch eingesetzt werden, um eine definierte Beleuchtung zu gewährleisten.

Es können auch zwei oder mehr als Kamera ausgebildete Empfangseinheiten 423 bzw. wenigstens eine Stereokamera vorgesehen sein, sodass optische Projektionen mit dreidimensionaler bzw. räumlicher Information ableitbar sind. Dadurch können Abstand, Form und Größe der Unwegsamkeit besonders detailliert und zuverlässig bestimmt werden.

Die Sensoreinrichtung 403 kann auch eine Kamera mit einer Lichtquelle umfassen und als Triangulationseinrichtung ausgebildet sein. Dabei projiziert die Lichtquelle ein definiertes Muster auf die Unwegsamkeit und die Kamera nimmt dieses Muster aus mehreren Blickwinkeln auf und berechnet aus der Musterverzerrung die Form oder Größe der Unwegsamkeit.

Möglich ist auch, dass die Sensoreinrichtung 403 mittels einer Lichtquelle Licht aussendet und die Erkennungseinrichtung 408 anhand einer Laufzeitmessung die Entfernung der Unwegsamkeit ermittelt.

Fig. 2b zeigt eine stark schematische Draufsicht auf ein Fahrrad, wobei hier drei unterschiedliche Nahbereiche eingezeichnet sind. Der Nahbereich 812a deckt z. B. einen rechteckigen und recht kleinen Bereich direkt vor dem Vorderrad des Fahrrads ab. Die Länge des Nahbereichs 812a ist hier kleiner als eine Länge des Fahrrads und die Breite ist kleiner als die Hälfte oder ein Drittel der Fahrradlänge. Ein solcher Nahbereichs 812a kann vielleicht bei einer Downhillfahrt sinnvoll sein.

Der Nahbereich 812c erstreckt sich hier erheblich weiter nach vorn. Eine Länge des Nahbereichs 812c ist hier größer als die doppelte Länge des Fahrrads und die Breite kann größer sein als die Hälfte der Länge des Fahrrads oder als die Länge des Fahrrads. Der Nahbereich 812c geht nach vorn hin hier spitzwinklig (dreieckförmig) auseinander. Ein solcher erheblich längerer und breiterer Nahbereich 812c kann auf glatten Straßen sinnvoll sein, auf denen wenige Unwegsamkeiten auftreten und zu erwarten sind. Deshalb kann ein größerer Nahbereich periodisch auf Unwegsamkeiten untersucht werden.

Der dritte eingezeichnete Nahbereich 812b ist hier oval ausgebildet und erstreckt sich vom Vorderrad aus nach vorn, wobei sich die spitzeren Enden in Fahrtrichtung erstrecken. Das vordere Ende ist abgerundet, um weiter entfernt liegende Unwegsamkeiten nur dann zu erkennen, wenn sie direkt auf der aktuell geplanten Route liegen, während im mittleren Entfernungsbereich auch seitliche Bereiche untersucht werden, da diese bei einer Lenkbewegung direkt in der Fahrlinie lägen.

Die Auswahl eines der Nahbereiche kann automatisch erfolgen. Es ist möglich, dass ein Wegtyp 810 automatisch ermittelt wird und nach Erkennung eines Wegtyps 810 ein entsprechender Nahbereich 812a, 812b oder 812c (oder noch ein andere Form) ausgewählt wird. Möglich ist es auch, dass ein Nahbereich manuell ausgewählt wird. Oder es wird ein Wegtyp und damit ein zugehöriger Nahbereich manuell ausgewählt.

In Fig. 2b wird im Falle aller drei Nahbereiche die Unwegsamkeit 801 als potenziell relevante Unwegsamkeit erkannt. Die Unwegsamkeit 811 wird hingegen nur von dem Nahbereich 812c erfasst. Die von der Erkennungseinrichtung 408 bestimmte Wahrscheinlichkeit für das Überfahren ist bei der Unwegsamkeit 801 groß genug, dass entsprechende Steuerbefehle ausgegeben werden. Die Unwegsamkeit 811 wird nur bei Einstellung des Nahbereichs 812c als relevant erkannt. Da der Abstand noch relativ groß ist, wird die Unwegsamkeit 811 periodisch weiter erfasst, bis die Wahrscheinlichkeit für das Überfahren ein vorbestimmtes Maß überschritten hat und entsprechende Steuerbefehle ausgegeben werden.

Fig. 3a zeigt in einer stark schematischen Ansicht eine Federgabel 114, die für das Vorderrad 111 Anwendung findet und Fig. 3b zeigt den Hinterraddämpfer 115, die im Folgenden gemeinsam beschrieben werden.

Die Federgabel 114 weist einen Stoßdämpfer 100 auf. Der Stoßdämpfer 100 umfasst eine Dämpfereinrichtung 1 in einem Bein der Federgabel und eine Federeinrichtung in dem anderen Bein der Federgabel. In anderen Ausgestaltungen können die Dämpfereinrichtung 1 und die Federeinrichtung 26 auch in einem Bein gemeinsam angeordnet sein.

Der Stoßdämpfer 100 wird mit dem ersten Ende als Komponente 101 und dem zweiten Ende als Komponente 102 an unterschiedlichen Teilen der Trageinrichtung 120 bzw. des Rahmens 113 befestigt, um Relativbewegungen zu federn und zu dämpfen.

Die Dämpfereinrichtung 1 umfasst eine erste Dämpferkammer 3 und eine zweite Dämpferkammer 4 in einem gemeinsamen Dämpfergehäuse 2. Die beiden Dämpferkammer 3 und 4 sind voneinander durch den Dämpferkolben bzw. Dämpfungskolben 5 getrennt, in oder an dem ein magnetorheologisches Dämpfungsventil 8 einen Dämpfungskanal 20 aufweist, durch den das magnetorheologische Dämpfungsfluid 9 (MRF) strömt. Während das Dämpfergehäuse 2 an dem oberen Teil der Federgabel 114 und somit dem Rahmen 113 befestigt ist, ist der Dämpferkolben 5 über die Kolbenstange 6 mit dem unteren Ausfallende verbunden.

In dem anderen Federbein der Federgabel ist hier die Federeinrichtung 26 angeordnet, die hier eine als Fluidfeder 261 ausgebildete Federeinheit 260 umfasst. Die Federeinrichtung weist ein Gehäuse auf, in welchem der mit der Kolbenstange 75 verbundene Federungskolben 37 eine Positivkammer 270 von einer Negativkammer 280 trennt. Die Positivkammer 270 bildet eine Positivfeder und die Negativkammer 280 bildet eine Negativfeder, deren Federkraft in der Ruheposition meist geringer ist, aber bei der die Federkraft der der Positivfeder entgegengesetzt ist. Dadurch wird ein gutes Ansprechverhalten erreicht, da auch bei kleinen Stößen die Fluidfeder 261 reagiert. Die Fluidfeder 261 ist mit einem Fluid und hier mit Gas und vorzugsweise Luft gefüllt.

Die Positivfeder umfasst hier zwei Teilkammern 271 und 272, die durch ein Steuerventil 273 voneinander bedarfsweise getrennt oder miteinander verbunden werden können. Die Negativfeder umfasst hier zwei Teilkammern 281 und 282, die durch ein Steuerventil 283 voneinander bedarfsweise getrennt oder miteinander verbunden werden können.

Die Teilkammer 272 der Positivkammer 270 und die Teilkammer 282 der Negativkammer 280 können über das Steuerventil 263 miteinander verbunden werden. Dadurch wird es mit den Steuerventilen 263, 273 und 283 möglich, an jeder beliebigen Federposition einen Druckausgleich zwischen der Positivkammer und der Negativkammer vorzunehmen, wodurch die jeweilige Charakteristik der Fluidfeder 261 geändert wird. Die Steuerventile 263, 273 und 283 dienen dabei als Aktoren, welche durch die Steuereinrichtung 60 gesteuert betätigt werden. Dadurch kann die Ruhelage frei eingestellt werden und auch ein Absenken einer Federgabel beispielsweise bei Bergfahrten erreicht werden. Bei einem Hinterradstoßdämpfer kann ein gegebenenfalls vorhandenes Zusatzvolumen in einer Teilkammer weggeschaltet werden und somit die Federung am Hinterrad für eine Bergauffahrt härter eingestellt werden. Es ist möglich, dass nur eines der Steuerventile 263, 273 und 283 vorgesehen ist. Beispielsweise kann nur das Steuerventil 273 (oder 283) vorgesehen sein, sodass durch Öffnen bzw. Schließen des Steuerventils 273 (bzw. 283) das Volumen der Positivkammer 270 (Negativkammer 280) und somit die Federcharakteristik der Federeinheit 260 verändert wird.

Es ist auch möglich, dass die Federgabel 114 nur ein Steuerventil 293 im Federungskolben 37 aufweist, welches über ein Kabel bzw. eine Steuerleitung 294 mit der Steuereinrichtung 60 verbunden ist. Durch das Öffnen des Steuerventils 293 kann ein Gastaustausch an jeder beliebigen axialen Position des Federungskolbens 37 ermöglicht werden. Ein Druckausgleich an einer geeigneten Stelle verändert die Ruhelage und führt z. B. zu einem Absenken oder zu einer Überführung in die Normallage, wenn die Federgabel abgesenkt war.

Durch geeignete Steuerung der Steuerventile kann auch das Druckniveau in der Positiv- und/oder Negativkammer beeinflusst werden.

Fig. 3b zeigt in einer stark schematischen Ansicht einen Querschnitt eines Stoßdämpfer 100, der hier beispielsweise in dem Hinterraddämpfer 115 Anwendung findet.

Der Stoßdämpfer 100 umfasst eine Dämpfereinrichtung 1. Der Stoßdämpfer 100 wird mit dem ersten Ende als Komponente 101 und dem zweiten Ende als Komponente 102 an unterschiedlichen Teilen der Trageinrichtung 120 bzw. des Rahmens 113 befestigt, um Relativbewegungen zu dämpfen.

In dem Dämpfergehäuse 2 ist eine Dämpfungskolbeneinheit 40 vorgesehen, die einen Dämpfungskolben 5 mit einem Dämpfungsventil 8 und eine damit verbundene Kolbenstange 6 umfasst. In dem Dämpfungskolben 5 ist das magnetorheologische Dämpfungsventil 8 vorgesehen, welches hier eine Felderzeugungseinrichtung 11 und insbesondere eine elektrische Spule umfasst, um eine entsprechende Feldstärke zu erzeugen. Zur Stromversorgung und/oder Datenübertragung dient ein Kabel 38. Die Magnetfeldlinien verlaufen dabei in dem Zentralbereich des Kerns 41 etwa senkrecht zur Längserstreckung der Kolbenstange 6 und durchtreten somit etwa senkrecht die Dämpfungskanäle. Dadurch wird eine effektive Beeinflussung des sich in den Dämpfungskanälen befindenden magnetorheologischen Fluides bewirkt, sodass der Durchfluss durch das Dämpfungsventil 8 effektiv gedämpft werden kann. Der Stoßdämpfer 100 umfasst eine erste Dämpferkammer 3 und eine zweite Dämpferkammer 4, die durch das als Kolben 5 ausgebildete Dämpfungsventil 8 voneinander getrennt sind. In anderen Ausgestaltungen ist auch ein externes Dämpferventil 8 möglich, welches außerhalb des Dämpfergehäuses 2 angeordnet und über entsprechende Zuleitungen angeschlossen ist.

Zu dem Ende 102 hin schließt sich an die erste Dämpferkammer 4 der Ausgleichskolben 72 und danach der Ausgleichsraum 71 an. Der Ausgleichsraum 71 ist vorzugsweise mit einem Gas gefüllt und dient zum Ausgleich des Kolbenstangenvolumens, welches beim Einfedern in das ganze Dämpfergehäuse 2 eintritt.

Nicht nur in dem Dämpfungsventil 8, sondern hier in den beiden Dämpfungskammern 3 und 4 insgesamt befindet sich hier ein magnetorheologisches Fluid 9 als feldempfindliches Medium.

Der Strömungskanal 7 zwischen der ersten Dämpferkammer 3 und der zweiten Dämpferkammer 4 erstreckt sich ausgehend von der zweiten Dämpferkammer 4 zunächst durch die fächerartigen Dämpfungskanäle, die am anderen Ende in den Sammelraum bzw. in die Sammelräume münden. Dort sammelt sich nach dem Austritt aus den Dämpfungskanälen das magnetorheologische Fluid, bevor es durch die Strömungsöffnungen 14, 15 in die erste Dämpfungskammer 3 übertritt. Beim Einfedern, also in der Druckstufe, werden hier sämtliche Strömungsöffnungen 14, 15 durchströmt. Das bedeutet, das der Hauptteil der Strömung hier durch die Strömungsöffnungen 15 durchtritt und die Einwegventile 17 an den Strömungsöffnungen 15 automatisch öffnen, sodass das magnetorheologische Fluid aus der zweiten Dämpferkammer 4 in die erste Dämpferkammer 3 übertreten kann.

Im dargestellten eingefederten Zustand ist die erste Dämpferkammer 3 vollständig radial von der zweiten Federkammer 28 der Federeinrichtung 26 umgeben. Dadurch wird ein besonders kompakter Aufbau ermöglicht.

Der Stoßdämpfer 100 umfasst eine Ausgleichseinrichtung 290, welche einen Druckausgleich zwischen der Positivkammer 270 und der Negativkammer 280 ermöglicht. Die Position des Druckausgleichs ist einstellbar. Dazu kann die Ausgleichseinrichtung 290 z. B. einen teleskopierbaren Ausgleichsstößel 291 aufweisen, der mehr oder weniger aus dem Federungskolben 37 ausfahrbar ist. Dadurch erreicht der ausfahrbare Ausgleichsstößel 291 früher (oder später) einen Anschlag am Ende der Negativkammer 280. Die Ausgleichseinrichtung 290 kann über ein elektrisches Kabel 294 mit der Steuerungseinrichtung 60 verbunden sein. Wenn der Ausgleichsstößel 291 anstößt, öffnet er eine Fluidöffnung daran, sodass ein Gasausgleich und somit ein Druckausgleich zwischen der Positivkammer 270 und der Negativkammer 280 erfolgt.

Beim Ausfedern schließt die Ausgleichseinrichtung 290 wieder automatisch. Je nach Position des Ausgleichs werden unterschiedliche Druckverhältnisse an der Fluidfeder 261 eingestellt, die das Fahrwerk entsprechend beeinflussen. Möglich ist es auch, dass am Ende der Negativkammer 280 ein verstellbarer oder verfahrbarer Anschlag für einen feststehenden Ausgleichsstößel 291 vorgesehen ist, um eine Variation der Federcharakteristik zu erzielen. Alternativ oder zusätzlich dazu kann ein längenverstellbarer Anschlag 297 vorgesehen sein, gegen den der Ausgleichsstößel 291 an einer einstellbaren und veränderbaren Position 292 bzw. 296 anschlägt. Wenn der Ausgleichsstößel 291 anschlägt, öffnet der Ausgleichsstößel 291 das Steuerventil 293 bzw. bildet eine Strömungsöffnung, durch welche ein Druckausgleich zwischen Positiv- und Negativkammer erfolgen kann. Fig. 3b zeigt eine Stellung 292 mit ausgefahrenem Ausgleichsstößel 291. Der Ausgleichsstößel 291 kann auch eingefahren werden, sodass sich eine andere Position 296 ergibt, bei der die Ausgleichseinrichtung 290 öffnet.

Weiterhin kann auch ein elektrisch steuerbares und z. B. über das elektrische Kabel 294 mit Energie versorgtes Ausgleichsventil 293 vorgesehen sein, um an geeigneten Positionen einen teilweisen oder vollständigen Druckausgleich zwischen der Positivkammer 270 und der Negativkammer 280 durchzuführen.

Der Ausgleichsstößel 291 ist vorzugsweise mit einer Feder beaufschlagt.

Weiterhin kann die Positivkammer 270 aus mehreren Teilkammern 271, 272 bestehen. Zu der Grundkammer als Teilkammer 271 kann bei Bedarf oder auf Wunsch die Teilkammer 272 zugeschaltet werden, um die Federhärte zu verändern und insbesondere zu verringern. Umgekehrt kann auch die Teilkammer 272 abgeschaltet und von der Teilkammer 271 getrennt werden, wenn die Federhärte verändert und insbesondere erhöht werden soll.

Analog dazu kann die Negativkammer 280 aus mehreren Teil-kammern 281, 282 bestehen. Zu der ersten Teilkammer 281 kann bei Bedarf oder auf Wunsch die zweite Teilkammer 282 zugeschaltet werden. Entsprechend kann auch die Teilkammer 282 abgeschaltet und von der Teilkammer 281 getrennt werden. In einer weiteren Ausgestaltung umfasst die Positivkammer 270 Teilkammern 271 und 272 und die Negativkammer 280 Teilkammern 281 und 282. Die Ausgleichseinrichtung 290 umfasst in dieser Ausgestaltung Steuerventile 273, 283 und 263 und eine Verbindungsleitung 265, welche die Teilkammern 272 und 282 bedarfsweise miteinander verbindet. Werden die drei Steuerventile 273, 283 und 263 geöffnet, so findet ein Druckausgleich zwischen der Positivkammer 270 und der Negativkammer 280 statt. Die Position 292 des Druckausgleichs ist dabei beliebig wählbar und unabhängig von einem Ausgleichsstößel 291. Deshalb muss bei einer solchen Ausgestaltung weder ein Ausgleichsstößel 291, noch ein Steuerventil 293 im Kolben 37, noch ein einstellbarer Anschlag 297 vorgesehen sein. Die Zu- und Abschaltung der Teilkammern kann in allen Fällen auch positionsabhängig beim Ein- oder Ausfedern erfolgen.

Der Federungskolben 37 ist am Ende des Dämpfergehäuses 2 vorgesehen. Daran angeordnet ist ein Halter 73, der einen Magneten 74 hält. Der Magnet 74 ist Teil eines Sensors 47. Der Sensor 47 umfasst ein Magnetpotentiometer, welches ein Signal erfasst, welches für die Position des Magneten 74 und damit des Federungskolbens 37 repräsentativ ist. Eine solches Potentiometer 47 erlaubt nicht nur die Bestimmung eines relativen Ortes, sondern erlaubt hier auch die absolute Feststellung des Ein- bzw. Ausfederungsstandes des Stoßdämpfers 100. Möglich ist auch der Einsatz eines Ultraschallsensors, um einen Abstand zu erfassen.

**Bezugszeichenliste:**

| | | | |
|---|---|---|---|
| 1 | Dämpfereinrichtung | 74 | Magnet |
| 2 | Dämpfergehäuse | 75 | Kolbenstange |
| 3 | erste Dämpferkammer | 90 | Dämpferkennlinie |
| 4 | zweite Dämpferkammer | 100 | Stoßdämpfer |
| 5 | Dämpfungskolben | 101 | Komponente |
| 6 | Kolbenstange | 102 | Komponente |
| 7 | Dämpfungskanal, Strömungskanal | 111 | Rad, Vorderrad |
| | | 112 | Rad, Hinterrad |
| 8 | Dämpfungsventil | 113 | Rahmen |
| 9 | MRF | 114 | Federgabel |
| 10 | Dämpferkennlinie | 115 | Hinterraddämpfer |
| 11 | elektrische Spuleneinrichtung | 116 | Lenker |
| | | 117 | Sattel |
| 12 | Steuerkreislauf | 118 | Winkelsensor |
| 14, 15 | Strömungsöffnung | 120 | Trageinrichtung |
| 16 | Durchgangsöffnung | 150 | Bedieneinrichtung |
| 17 | Einwegventil | 151 | Betätigungseinrichtung |
| 26 | Federeinrichtung | 152 | Einstelleinrichtung |
| 27 | Positivkammer | 153 | mechanische Eingabeeinheit |
| 28 | Negativkammer | | |
| 37 | Federungskolben | 154-156 | Bedienelement |
| 38 | Kabel | 160 | Smartphone |
| 40 | Dämpfungskolbeneinheit | 161-164 | Bereich |
| 41 | Kern | 169-173 | Punkt |
| 45 | Speichereinrichtung | 200 | Zweirad |
| 46 | Steuereinrichtung | 260 | Federeinheit |
| 47 | Dämpfersensor, Sensor | 261 | Fluidfeder |
| 48 | Daten | 263 | Steuerventil |
| 49 | Display, Anzeige | 265 | Leitung |
| 52 | Schritt | 270 | Positivkammer |
| 53 | Internet | 271, 272 | Teilkammer |
| 54 | Netzwerkschnittstelle | 273 | Steuerventil |
| 55 | Funknetzschnittstelle | 280 | Negativkammer |
| 56 | Schritt | 281, 282 | Teilkammer |
| 57 | Touchscreen, grafische Bedieneinheit | 283 | Steuerventil |
| | | 290 | Ausgleichseinrichtung |
| 60 | Steuereinrichtung | 291 | Ausgleichsstößel |
| 61 | Batterieeinheit | 292 | Position |
| 70 | Schritt | 293 | Ausgleichsventil |
| 71 | Ausgleichsraum | 294 | Kabel, Steuerleitung |
| 72 | Ausgleichskolben | 296 | Position |
| 73 | Halter | 297 | Anschlag |
| 300 | Fahrwerksteuerung | 476 | Sensormodul |
| 401 | Fahrradkomponente | 801 | Unwegsamkeit |
| 403 | Sensoreinrichtung | 802 | Nahbereich |
| 408 | Erkennungseinrichtung | 803 | Höhe |
| 413 | Sendeeinheit | 804 | Winkel |
| 418 | Speichereinrichtung | 805 | Entfernung |
| 423 | Empfangseinheit | 806 | Erfassungsbereich |
| 424 | Ultraschallsensor | 807 | Breite |
| 433 | Halteeinrichtung | 810 | Wegtyp |
| 434 | Infrarotsensor | 811 | Unwegsamkeit |
| 444 | Radarsensor | 812a-c | Nahbereich |

## Patentansprüche

1. Fahrradkomponente (401) für ein wenigstens teilweise muskelbetriebenes Fahrrad (200) mit wenigstens einer Stoßdämpfereinrichtung (100) mit wenigstens einer über wenigstens eine Steuereinrichtung (60) steuerbaren Dämpfereinrichtung (1),
wobei die Fahrradkomponente (401) wenigstens eine Erkennungseinrichtung (408) mit wenigstens einer Sensoreinrichtung (403) aufweist und die Sensoreinrichtung (403) wenigstens eine Empfangseinheit (423) zur berührungslosen Erfassung wenigstens eines Signals umfasst, wobei wenigstens ein Teil der Sensoreinrichtung bei einer Lenkbewegung verschwenkbar ist und wobei der Teil der Sensoreinrichtung oder die Sensoreinrichtung insgesamt an einem feststehenden Teil der Fahrradkomponente befestigbar ist,
wenn für eine Übertragung der Lenkbewegung auf die Sensoreinrichtung bzw. den verschwenkbaren Teil der Sensoreinrichtung gewährleistet ist
oder wobei die Sensoreinrichtung an wenigstens einem Bauteil des Fahrrads angeordnet werden kann, welches bei einer Lenkbewegung verschwenkbar ist bzw. mit verschwenkt wird
und wobei die Erkennungseinrichtung (408) dazu geeignet und ausgebildet ist, in Abhängigkeit des erfassten Signals eine Unwegsamkeit (801) zu erkennen und ein entsprechendes Steuersignal an eine zentrale Steuereinrichtung (60) zu senden, über die die wenigstens eine Stoßdämpfereinrichtung (100) in Abhängigkeit der erkannten Unwegsamkeit (801) steuerbar ist, sodass wenigstens eine Dämpfungseigenschaft der Stoßdämpfereinrichtung (100) durch ein Signal der Erkennungseinrichtung (408) einstellbar ist, **dadurch gekennzeichnet,**
**dass** die Sensoreinrichtung (403) wenigstens eine Sendeeinheit (413) zur Aussendung wenigstens eines Signals umfasst und dass die Empfangseinheit (423) dazu geeignet und ausgebildet ist, wenigstens eine von der Unwegsamkeit (801) ausgehende Reflexion des ausgesendeten Signals als Signal zu erfassen.

2. Fahrradkomponente (401) nach Anspruch 1, wobei die Erkennungseinrichtung (408) dazu geeignet und ausgebildet ist, für die Steuerung der Dämpfereinrichtung (1) nur Unwegsamkeiten (801) in einem vorgegebenen Nahbereich (802) zu berücksichtigen und wobei die Erkennungseinrichtung (408) insbesondere dazu geeignet und ausgebildet ist, den Nahbereich (802) in Abhängigkeit einer Fahrgeschwindigkeit des Fahrrads (200) vorzugeben und wobei sich der Nahbereich (802) über die Distanz erstreckt, welche das Fahrrad (200) anhand der Fahrgeschwindigkeit in einer Sekunde zurücklegt.

3. Fahrradkomponente (401) nach einem der vorhergehenden Ansprüche, wobei die Erkennungseinrichtung (408) dazu geeignet und ausgebildet ist, einen Wegtyp wie z. B. Waldweg, Downhill, Straße etc. zu klassifizieren und den Nahbereich (802) in Abhängigkeit des erkannten Wegtyps vorzugeben.

4. Fahrradkomponente (401) nach dem vorhergehenden Anspruch, wobei die Erkennungseinrichtung (408) dazu geeignet und ausgebildet ist, den Wegtyp in Abhängigkeit von einer Häufigkeit und Intensität der überfahrenen Unwegsamkeiten (801) zu klassifizieren.

5. Fahrradkomponente (401) nach dem vorhergehenden Anspruch, wobei die Erkennungseinrichtung (408) dazu geeignet und ausgebildet ist, einen Wahrscheinlichkeitswert für ein Überfahren einer erkannten Unwegsamkeit (801) abzuleiten und bei Übersteigen einer vorbestimmten Wahrscheinlichkeit die Stoßdämpfereinrichtung (100) in Abhängigkeit von der erkannten Unwegsamkeit (801) einzustellen.

6. Fahrradkomponente (401) nach einem der vorhergehenden Ansprüche, wobei die Erkennungseinrichtung (408) dazu geeignet und ausgebildet ist, die Höhe der Unwegsamkeit (801) über dem Boden und/oder den Winkel wenigstens eines Bereichs der Unwegsamkeit (801) zum Boden zu ermitteln und für die Steuerung der Dämpfereinrichtung (1) zu berücksichtigen.

7. Fahrradkomponente (401) nach einem der vorhergehenden Ansprüche, umfassend wenigstens eine Steuereinrichtung (60), wobei die Steuereinrichtung (60) geeignet und ausgebildet ist, die Dämpfereinrichtung (1) bis zum Erreichen der Unwegsamkeit härter einzustellen.

8. Fahrradkomponente (401) nach einem der vorhergehenden Ansprüche, wobei die Stoßdämpfereinrichtung (100) wenigstens eine einem Vorderrad (111) zugeordnete erste Dämpfereinrichtung (114) und wenigstens eine einem Hinterrad (112) zugeordnete zweite Dämpfereinrichtung (115) umfasst und wobei die Erkennungseinrichtung (408) dazu geeignet und ausgebildet ist, die zweite Dämpfereinrichtung (115) zeitverzögert zu der ersten Dämpfereinrichtung (114) einzustellen.

9. Fahrradkomponente (401) nach einem der vorhergehenden Ansprüche, wobei der Dämpfereinrichtung (1) wenigstens ein Sensormodul (476) zur Erfassung einer Dämpferauslastung zugeordnet ist und wobei die Erkennungseinrichtung (408) dazu geeignet und ausgebildet ist, das Sensormodul (476) auszulesen und die Dämpferauslastung als Folge einer auf eine erkannte Unwegsamkeit (801) erfolgten Einstellung der Dämpfereigenschaft zu registrieren und bei einer Abweichung der registrierten Dämpferauslastung von einem vorgegebenen Maß für die Dämpferauslastung die Steuerung der Dämpfereinrichtung (1) anzupassen.

10. Fahrradkomponente (401) nach einem der vorhergehenden Ansprüche, wobei die Sensoreinrichtung (403) verschwenkbar an wenigstens einer Halteeinrichtung (433) aufgenommen ist, sodass der Sendewinkel und/oder Empfangswinkel zum Boden einstellbar ist und/oder wobei eine horizontale Breite und/oder eine Länge und/oder eine Form des Nahbereich (802) einstellbar ist.

11. Fahrradkomponente (401) nach einem der vorhergehenden Ansprüche, wobei wenigstens ein Winkelsensor zur Erkennung eines Lenkeinschlags vorgesehen ist.

12. Verfahren zum Betreiben einer Fahrradkomponente (401) für ein wenigstens teilweise muskelbetriebenes Fahrrad (200) nach einem der vorhergehenden Ansprüche, wobei das Fahrrad (200) wenigstens eine Stoßdämpfereinrichtung (100) mit wenigstens einer Dämpfereinrichtung (1) aufweist, wobei die Dämpfereinrichtung (1) über wenigstens eine Steuereinrichtung (60) gesteuert wird, wobei mittels einer Sensoreinrichtung (403) einer Erkennungseinrichtung (408) wenigstens ein Signal erfasst wird,
**dadurch gekennzeichnet,**
**dass** anhand des erfassten Signals eine Unwegsamkeit (801) erkannt wird und in Abhängigkeit der erkannten Unwegsamkeit (801) die Dämpfereinrichtung (1) gesteuert und wenigstens eine Dämpfungseigenschaft der Dämpfereinrichtung (1) eingestellt wird,
und **dass** nach Erkennung der Unwegsamkeit bis zum Erreichen der Unwegsamkeit die Dämpfereinrichtung (1) härter eingestellt wird.

## Claims

1. Bicycle component (401) for an at least partially muscle-powered bicycle (200) having at least one shock absorber device (100) having at least one damper device (1) that can be controlled by at least one control device (60),
wherein the bicycle component (401) comprises at least one identification device (408) having at least one sensor device (403) and wherein the sensor device (403) comprises at least one receiving unit (423) for non-contact capturing of at least one signal,
wherein at least part of the sensor device is pivotable with a steering movement and wherein the part of the sensor device or the entire sensor device may be attached to a stationary part of the bicycle component if transmission of the steering movement to the sensor device respectively to the pivotable part of the sensor device is ensured
or wherein the sensor device can be disposed on at least one component of the bicycle which can, or will, pivot along with a steering movement
and wherein the identification device (408) is suitable and configured to identify a hazard (801) in dependence on the captured signal and to send a suitable control signal to a central control device (50) through which the at least one shock absorber device (100) can be controlled in dependence on the identified hazard (801) so that at least one damping characteristic of the shock absorber device (100) can be adjusted by a signal from the identification device (408),
**characterized in**
**that** the sensor device (403) comprises at least one transmitting unit (413) for emitting at least one signal and that the receiving unit (423) is suitable and configured to capture as a signal at least one reflection of the emitted signal returning from the hazard (801).

2. The bicycle component (401) according to claim 1 wherein the identification device (408) is suitable and configured to take into account for controlling the damper device (1) only hazards (801) in a specified near zone (802) and wherein the identification device (408) is in particular suitable and configured to specify the near zone (802) in dependence on a traveling speed of the bicycle (200) and wherein the near zone (802) extends over the distance which the bicycle (200) travels in one second according to its traveling speed.

3. The bicycle component (401) according to any of the preceding claims wherein the identification device (408) is suitable and configured to classify a type of way such as a forest path, downhill, road etc. and to specify the near zone (802) in dependence on the identified type of way.

4. The bicycle component (401) according to the preceding claim wherein the identification device (408) is suitable and configured to classify the type of way in dependence on the frequency and intensity of the hazards (801) ridden over.

5. The bicycle component (401) according to the preceding claim wherein the identification device (408) is suitable and configured to derive a probability value for riding over an identified hazard (801) and if a specified probability is exceeded, to adjust the shock absorber device (100) in dependence on the identified hazard (801).

6. The bicycle component (401) according to any of the preceding claims wherein the identification device (408) is suitable and configured to determine the height of the hazard (801) above the ground and/or the angle of at least one portion of the hazard (801) relative to the ground and to take these into account for controlling the damper device (1).

7. The bicycle component (401) according to any of the preceding claims comprising at least one control device (60) wherein the control device (60) is suitable and configured to increase the hardness of the damper device (1) until the hazard is reached.

8. The bicycle component (401) according to any of the preceding claims wherein the shock absorber device (100) comprises at least one first damper device (114) assigned to a front wheel (111) and at least one second damper device (115) assigned to a rear wheel (112) and wherein the identification device (408) is suitable and configured to adjust the second damper device (115) with a time delay relative to the first damper device (114).

9. The bicycle component (401) according to any of the preceding claims wherein the damper device (1) has at least one sensor module (476) assigned to it for capturing damper utilization and wherein the identification device (408) is suitable and configured to read out the sensor module (476) and to detect the damper utilization resulting from adjustment of the damper properties based on an identified hazard (801) and, in case that the detected damper utilization deviates from a specified amount for the damper utilization, to adapt the control of the damper device (1).

10. The bicycle component (401) according to any of the preceding claims wherein the sensor device (403) is pivotably accommodated on at least one holding device (433) so that the transmitting angle and/or receiving angle relative to the ground is adjustable and/or wherein a horizontal width and/or length and/or shape of the near zone (802) is adjustable.

11. The bicycle component (401) according to any of the preceding claims wherein at least one angle sensor is provided to identify the steering angle.

12. Method for operating a bicycle component (401) of an at least partially muscle-powered bicycle (200) according to any of the preceding claims, the bicycle (200) comprising at least one shock absorber device (100) having at least one damper device (1) wherein the damper device (1) is controlled by at least one control device (60), wherein at least one signal is captured by means of a sensor device (403) of an identification device (408),
**characterized in**
**that** a hazard (801) is identified by way of the captured signal and the damper device (1) is controlled in dependence on the identified hazard (801) and at least one damping characteristic of the damper device (1) is adjusted, and that the hardness of the damper device (1) is increased after identifying the hazard until the hazard is reached.

## Revendications

1. Composant de bicyclette (401) pour une bicyclette (200) qui est entraînée au moins en partie par force musculaire, comprenant au moins un dispositif d'amortissement de chocs (100) avec au moins un dispositif amortisseur (1) apte à être commandé par au moins un dispositif de commande (60),
dans lequel ledit composant de bicyclette (401) présente au moins un dispositif d'identification (408) ayant au moins un dispositif à capteur (403) et ledit dispositif à capteur (403) comprend au moins une unité de réception (423) pour la détection sans contact d'au moins un signal,
dans lequel au moins une partie du dispositif à capteur peut pivoter pendant un mouvement de direction, et dans lequel ladite partie du dispositif à capteur ou le dispositif à capteur dans l'ensemble peut être fixé(e) à une partie fixe du composant de bicyclette lorsqu'une transmission du mouvement de direction au dispositif à capteur ou bien à la partie pivotante du dispositif à capteur est assurée
ou dans lequel le dispositif à capteur peut être agencé sur au moins un élément de la bicyclette, qui peut pivoter ou bien est entraîné à pivoter lui aussi lors d'un mouvement de direction
et dans lequel ledit dispositif d'identification (408) est adapté et configuré pour détecter un point impraticable (801) en fonction du signal détecté et pour émettre un signal de commande correspondant à un dispositif de commande central (60) par lequel ledit au moins un dispositif d'amortissement de chocs (100) est commandable en fonction du point impraticable (801) détecté de sorte qu'au moins une propriété d'amortissement du dispositif d'amortissement de chocs (100) peut être réglée par un signal du dispositif d'identification (408),
**caractérisé par le fait**
**que** ledit dispositif à capteur (403) comprend au moins une unité d'émission (413) destinée à émettre au moins un signal et que l'unité de réception (423) est adaptée et configurée pour détecter, en tant que signal, au moins une réflexion du signal émis laquelle provient du point impraticable (801).

2. Composant de bicyclette (401) selon la revendication 1, dans lequel le dispositif d'identification (408) est adapté et configuré pour ne prendre en compte, pour la commande du dispositif amortisseur (1), que des points impraticables (801) situés dans une zone proche (802) prédéterminée, et dans lequel le dispositif d'identification (408) est adapté et configuré en particulier pour prédéterminer la zone proche (802) en fonction d'une vitesse de déplacement de la bicyclette (200), et dans lequel la zone proche (802) s'étend sur la distance qui est parcourue par la bicyclette (200) en une seconde à partir de la vitesse de déplacement.

3. Composant de bicyclette (401) selon l'une quelconque des revendications précédentes, dans lequel le dispositif d'identification (408) est adapté et configuré pour classifier un type de chemin, tel que, par exemple, chemin forestier, descente, rue etc., et pour prédéterminer la zone proche (802) en fonction du type de chemin identifié.

4. Composant de bicyclette (401) selon la revendication précédente, dans lequel le dispositif d'identification (408) est adapté et configuré pour classifier le type de chemin en fonction d'une fréquence et d'une intensité des points impraticables (801) parcourus.

5. Composant de bicyclette (401) selon la revendication précédente, dans lequel le dispositif d'identification (408) est adapté et configuré pour dériver une valeur de probabilité pour un passage d'un point impraticable (801) détecté et pour régler le dispositif d'amortissement de chocs (100) en fonction du point impraticable (801) détecté lorsqu'une probabilité prédéterminée est dépassée.

6. Composant de bicyclette (401) selon l'une quelconque des revendications précédentes, dans lequel le dispositif d'identification (408) est adapté et configuré pour déterminer la hauteur du point impraticable (801) au-dessus du sol et/ou l'angle d'au moins une zone du point impraticable (801) par rapport au sol et pour prendre en compte celle-ci ou bien celui-ci pour la commande du dispositif amortisseur (1).

7. Composant de bicyclette (401) selon l'une quelconque des revendications précédentes, comprenant au moins un dispositif de commande (60), dans lequel ledit dispositif de commande (60) est adapté et configuré pour régler le dispositif amortisseur (1) de manière à être plus dur jusqu'à ce que le point impraticable soit atteint.

8. Composant de bicyclette (401) selon l'une quelconque des revendications précédentes, dans lequel le dispositif d'amortissement de chocs (100) comprend au moins un premier dispositif amortisseur (114) associé à une roue avant (111) et au moins un deuxième dispositif amortisseur (115) associé à une roue arrière (112), et dans lequel le dispositif d'identification (408) est adapté et configuré pour régler le deuxième dispositif amortisseur (115) de manière à être retardé par rapport au premier dispositif amortisseur (114).

9. Composant de bicyclette (401) selon l'une quelconque des revendications précédentes, dans lequel au moins un module de capteur (476) destiné à détecter une utilisation d'amortisseur est associé au dispositif amortisseur (1), et dans lequel le dispositif d'identification (408) est adapté et configuré pour lire le module de capteur (476) et pour enregistrer l'utilisation d'amortisseur en tant que conséquence d'un réglage de la propriété d'amortisseur effectué suite à un point impraticable (801) détecté, et pour adapter la commande du dispositif amortisseur (1) lorsque l'utilisation d'amortisseur enregistrée est différente d'une mesure prédéterminée pour l'utilisation d'amortisseur.

10. Composant de bicyclette (401) selon l'une quelconque des revendications précédentes, dans lequel le dispositif à capteur (403) est reçu à pivotement sur au moins un dispositif de maintien (433) de sorte que l'angle d'émission et/ou l'angle de réception par rapport au sol est réglable, et/ou dans lequel une largeur horizontale et/ou une longueur et/ou une forme de la zone proche (820) est réglable.

11. Composant de bicyclette (401) selon l'une quelconque des revendications précédentes, dans lequel au moins un capteur d'angle est prévu pour détecter un angle de braquage.

12. Procédé pour faire fonctionner un composant de bicyclette (401) pour une bicyclette (200) entraînée au moins en partie par force musculaire selon l'une quelconque des revendications précédentes, dans lequel la bicyclette (200) comprend au moins un dispositif d'amortissement de chocs (100) avec au moins un dispositif amortisseur (1), dans lequel ledit dispositif amortisseur (1) est commandé par au moins un dispositif de commande (60), dans lequel au moins un signal est détecté au moyen d'un dispositif à capteur (403) d'un dispositif d'identification (408),
**caractérisé par le fait**
**qu'**un point impraticable (801) est détecté à partir du signal détecté et ledit dispositif amortisseur (1) est commandé en fonction du point impraticable (801) détecté et au moins une propriété d'amortissement du dispositif amortisseur (1) est réglée,
et **que**, après avoir détecté le point impraticable, le dispositif amortisseur (1) est réglé de manière à être plus dur jusqu'à ce que le point impraticable soit atteint.
